# EUROPÄISCHE PATENTSCHRIFT

(11) **EP 2 006 258 B1**
(45) Veröffentlichungstag und Bekanntmachung des Hinweises auf die Patenterteilung: **15.08.2012**
(21) Anmeldenummer: 07109997.2
(22) Anmeldetag: 11.06.2007
(51) Int. Cl.: C04B 24/26, C04B 28/14

(54) **Dispergiermittel für Gipszusammensetzungen**
Dispersant for gypsum compositions
Agent dispersant pour compositions de gypse

(43) Veröffentlichungstag der Anmeldung: 24.12.2008
(73) Patentinhaber: Sika Technology AG, 6340 Baar (CH)
(72) Erfinder: Sulser, Ueli, 8103, Unterengstringen (CH); Müller, Burkhard, 71254, Ditzingen-Heimerdingen (DE); Hampel, Christina, 8102, Oberengstringen (CH)
(74) Vertreter: Sika Patent Attorneys

(56) Entgegenhaltungen:
- EP-A- 1 136 508
- EP-A- 1 138 697
- EP-A- 1 348 729
- EP-A- 1 577 327
- WO-A-95/09821
- WO-A-2005/123621

## Beschreibung

### Technisches Gebiet

Die vorliegende Erfindung betrifft das Gebiet der Gipszusammensetzungen, insbesondere der Dispergiermittel für Gipszusammensetzungen.

### Stand der Technik

Polymere aus α- β-ungesättigten Carbonsäuren mit Polyalkylenglykol-Seitenketten werden bereits seit längerem in der Betontechnologie als Dispergiermittel, insbesondere als Verflüssiger, wegen ihrer starken Wasserreduktion eingesetzt, wie beispielsweise in EP1136508A1 beschrieben. Diese Polymere haben eine Kammpolymerstruktur. Es gibt eine Reihe von solchen Kammpolymeren, welche neben Ester- und Carbonsäure-Gruppen auch Amidgruppen aufweisen.

Es hat sich nun gezeigt, dass die bekannten Betondispergiermittel nur bedingt für Gipszusammensetzungen eingesetzt werden können. Die bekannten Betondispergiermittel erreichen im Gips entweder nur eine relativ geringe Verflüssigung und müssen daher in hohen Dosierungen eingesetzt werden, oder sie verzögern so stark, dass die Gipszusammensetzung kaum noch abbindet.

Als Gipsverflüssiger wurden bisher beispielsweise Melamin-Sulfonsäure-Formaldehyd Kondensate eingesetzt. Diese Verflüssiger sind jedoch wegen der Freisetzung des toxischen Formaldehyds ökologisch problematisch und daher nicht erwünscht. Andere bekannte Gipsverflüssiger basieren auf Lignin- oder Naphthalinsulfonaten, wie beispielsweise in WO02081400A1 beschrieben. Solche Verflüssiger weisen den Nachteil auf, dass sich die damit hergestellten Gipszusammensetzungen verfärben.

### Darstellung der Erfindung

Aufgabe der vorliegenden Erfindung ist es daher, Dispergiemittel zur VerfUgung zu stellen, bei denen die Nachteile des Standes der Technick überwunden werden, und welche geeignet sind, eine ausreichende Verflüssigungswirkung von Gipszusammensetzungen zu erzielen ohne zu stark zu verzögern.
Überraschenderweise wurde gefunden, dass dies durch die Verwendung eines Polymers **P** gemäss Anspruch 1 erreicht werden kann. Es konnte nun überraschend festgestellt werden, dass mit Polymeren, welche ein Verhältnis der Carbonsäureeinheiten zu den Ester-/Amideinheiten zwischen 2 und 6 aufweisen, eine besonders gute Verflüssigungswirkung in Gipszusammensetzungen erreicht werden kann. Weiterhin hat sich gezeigt, dass diese Polymere zur Wasserreduktion von Gipszusammensetzungen eingesetzt werden können und dass sie, ohne das Abbinden zu stark zu verzögern, zu einer längeren Verarbeitungszeit führen. Zudem zeigen Gipszusammensetzungen mit den erfindungsgemäss verwendeten Polymeren ein deutlich geringeres Schwind- und Quellverhalten als die mit herkömmlichen Gipsverflüssigern hergestellten. Ebenfalls sind mit diesen Polymeren Zusammensetzungen möglich, die sich nicht verfärben.
Die Erfindung umfasst zudem Bindemittel enthaltende Gemische umfassend Gips und mindestens ein Polymer **P**, welches ein Verhältnis der Carbonsäureeinheiten zu den Ester-/Amideinheiten zwischen 2 und 6 aufweist, sowie die Herstellung solcher Bindemittel enthaltenden Gemische. Weitere vorteilhafte Ausgestaltungen der Erfindung ergeben sich aus den Unteransprüchen.

### Wege zur Ausführung der Erfindung

Die vorliegende Erfindung betrifft die Verwendung eines Polymers **P** als Dispergiermittel für Gipszusammensetzungen.
Das Dispergiermittel kann insbesondere verwendet werden als Verflüssiger, als Wasserreduzierer oder zur Verbesserung der Verarbeitbarkeit und der Fliessfähigkeit der damit hergestellten Gipszusammensetzungen.
In einer besonders bevorzugten Verwendung wird das Polymer **P** als Verflüssiger für Gipszusammensetzungen verwendet.

Unter "Gipszusammensetzung" wird eine Zusammensetzung verstanden, welche mindestens 30 Gew.-%, bevorzugt mindestens 50 Gew.-%, noch mehr bevorzugt mindestens 80 Gew.-%, oder 100 Gew.-% Gips enthält, bezogen auf das Gesamtgewicht des Bindemittels. Bei einer bevorzugten Anwendung ist die Gipszusammensetzung zementfrei. Als Gipszusammensetzungen werden insbesondere Zusammensetzungen verstanden, welche überwiegend sulfatische Bindemittel enthalten. Solche Gipszusammensetzungen sind beispielsweise:
- Anhydritfliessestrich (AFE) auf Basis von Natur-, Chemie- und REA-Anhydrit sowie Calciumsulfat-α-Halbhydrat,
- Spachtelmassen auf Basis von Calciumsulfat-α-Halbhydrat, die alkalisch oder neutral eingestellt sind,
- Modell- und Formgipse wie Giessform-, Drehform-, Hart- Pressform-, Druckguss- und Einrichtungsgips,
- Gips-Zusammensetzungen auf Basis von Calciumsulfat-β-Halhydrat wie sie beispielsweise zur Herstellung von Gipskartonplatten verwendet werden.

Unter den Begriff "Bindemittel" fallen neben Gips weitere hydraulisch abbindende Substanzen, wie beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.
Zum Term "Gips" wird jede bekannte Form von Gips gezählt, insbesondere Calciumsulfat-Dihydrat, Calciumsulfat-α-Halbhydrat, Calciumsulfat-β-Halbhydrat oder Calciumsulfat-Anhydrit.

Das Polymer **P**, welches sich erfindungsgemäss besonders zur Verwendung als Dispergiermittel, insbesondere als Verflüssiger, für Gipszusammensetzungen eignet, umfasst:
a) m Mol-% mindestens einer Struktureinheit **A** der Formel (I); 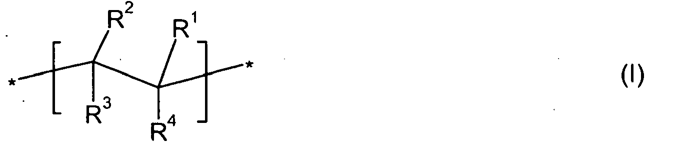
b) *n* Mol-% mindestens einer Struktureinheit **B** der Formel (II); 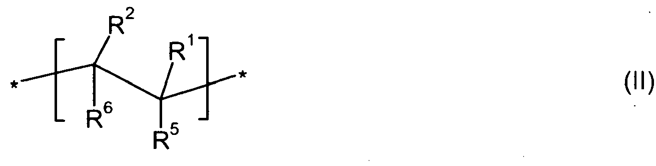
c) *o* Mol-% mindestens einer Struktureinheit **C** der Formel (III); 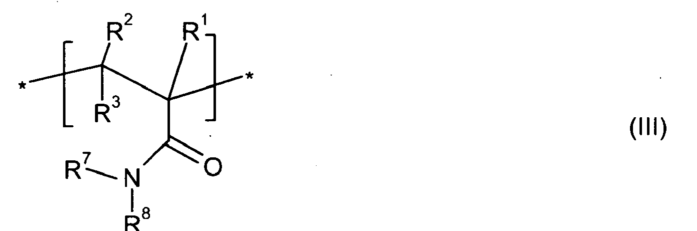 und gegebenenfalls
d) *p* Mol-% mindestens einer weiteren Struktureinheit **D**.

Dabei steht R¹ unabhängig voneinander für H, CH₂COOM oder eine Alkylgruppe mit 1 bis 5 Kohlenstoffatomen und R² unabhängig voneinander für H, eine Alkylgruppe mit 1 bis 5 Kohlenstoffatomen, COOM oder CH₂COOM.
R³ kann unabhängig voneinander für H, CH₃, COOM oder CH₂COOM stehen und R⁴ steht für COOM, oder R³ kann mit R⁴ einen Ring bilden zu -CO-O-CO-.
M bedeutet H, einen C₁ - C₅-Alkylrest, Alkalimetall, Erdalkalimetall, Ammonium, Ammoniumkation, oder Mischungen davon.
R⁵ steht unabhängig voneinander für 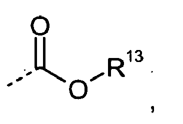 wobei R¹³ für -[(R⁹O)ₓ-(R¹⁰O)_{y}-(R¹¹O)_{z}]-R¹² steht, und R⁹, R¹⁰ und R¹¹ je unabhängig voneinander eine C₂ - C₄ Alkylengruppe bedeutet mit einer Reihenfolge der (R⁹O)-, (R¹⁰O)-, und (R¹¹O)-Einheiten in irgendeiner möglichen Sequenz. R¹² steht für H, einen C₁ - C₁₂ Alkyl- oder Cycloalkylrest, einen C₇ - C₂₀ Alkylaryl- oder Aralkylrest, oder einen substituierten oder unsubstituierten Arylrest, und x, y, z weisen unabhängig voneinander je die Werte 0 - 250 auf und x+y+z = 3 - 250.

R⁶ steht unabhängig voneinander für H, CH₃, COOM, CH₂COOM oder einen Substituenten wie für R⁵ definiert.

R⁷ und R⁸ können zusammen einen Ring bilden, der gegebenenfalls Sauerstoff-, Schwefel- oder weitere Stickstoffatome enthält, oder
R⁷ und R⁸ stellen unabhängig voneinander H, eine C₁ - C₂₀ Alkylgruppe, eine C₅ - C₉ Cycloalkyl-Gruppe, eine C₇ - C₁₂ Aralkyl-Gruppe, eine Hydroxyalkylgruppe, oder eine Verbindung der Formel (IV), (V) oder (VI) dar,

-R¹⁴-X(R¹⁵)ᵣ (IV)

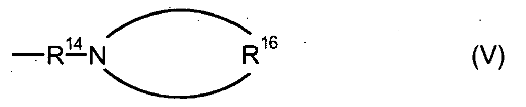

-[(R^{9'}O)_{x'}-(R^{10'}O)_{y'}-(R^{11'}O)_{z'}]- R^{12'} (VI)

wobei R¹⁴ unabhängig voneinander eine Alkylengruppe und R¹⁵ eine C₁- bis C₄-Alkylgruppe, und X unabhängig voneinander ein S, O oder N darstellt, wobei r = 1, falls X= S oder O, oder r = 2, falls X = N, wobei R¹⁶ eine Alkylengruppe mit gegebenenfalls Heteroatomen ist und mit dem Stickstoffatom einen 5-er- bis 8-er-Ring, insbesondere einen 6-er-Ring bildet, und wobei R^{9'}, R^{10'} und R^{11'} je unabhängig voneinander eine C₂ - C₄ Alkylengruppe bedeutet mit einer Reihenfolge der (R^{9'}O)-, (R^{10'}O)-, und (R^{11'}O)-Einheiten in irgendeiner möglichen Sequenz, und R^{12'} für einen C₁ - C₁₂ Alkyl- oder Cycloalkylrest, einen C₇ - C₂₀ Alkylaryl- oder Aralkylrest, oder einen substituierten oder unsubstituierten Arylrest steht. R⁷ kann sowohl für Reste stehen, wie sie für R^{7'} in der Formel (VIII) definiert sind, aber auch für Reste, wie sie für R^{7"} in der Formel (VIII') definiert sind. Ebenso kann R⁸ sowohl für Reste stehen, wie sie für R^{8'} in der Formel (VIII) definiert sind, aber auch für Reste, wie sie für R^{8"} in der Formel (VIII') definiert sind.
Die Indizes x', y', z' weisen unabhängig voneinander je die Werte 0 - 100 auf und x'+y'+z' = 1 - 100.

Dabei bedeuten *m*, *n, o*, *p* unabhängig voneinander Zahlen, wobei *m+n+o+p* = 100, und *m*>0, *n*>0, *o*>0 und *p*≥0 bedeuten. Das Verhältnis *m*/*(n+o+p)* beträgt zwischen 2 und 6.

Vorzugsweise steht m für eine Zahl von 50 - 95, vorzugsweise für 66 - 86, n für eine Zahl von 5 - 50, vorzugsweise für 14 - 34, *o* für eine Zahl von 0.001 - 30, vorzugsweise für 0.01 - 1 und p für eine Zahl von 0 - 30, vorzugsweise für 0 - 1.

Es hat sich gezeigt, dass eine überraschend gute Verflüssigungswirkung in Gipszusammensetzungen erzielt wird, wenn das Polymer **P** ein Verhältnis der Säureeinheiten (A) zu den restlichen Einheiten (B, C, D), d.h. insbesondere zu Ester- und Amideinheiten, von 2 bis 6 aufweist.

Das Verhältnis *m*/*(n+o+p)* bedeutet das Verhältnis aller Carbonsäureeinheiten **A** zu den Ester- (**B**) und Amideinheiten (**C**) und gegebenenfalls weiterer Einheiten der Struktureinheit **D** im Polymer **P**. Besonders gute Resultate werden erzielt, wenn dieses Verhältnis zwischen 2.5 und 5.0, insbesondere zwischen 2.70 und 3.98 beträgt.

M kann ein Kation, insbesondere H⁺, Na⁺, Ca⁺⁺/2, Mg⁺⁺/2, NH₄⁺ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymeren **P** sein kann. Die Ammoniumverbindungen sind insbesondere Tetraalkylammonium oder aber HR₃N⁺, wobei R eine Alkylgruppe insbesondere eine C₁- bis C₆-Alkylgruppe, bevorzugt Ethyl oder Butyl, darstellt. Ammoniumionen werden insbesondere durch die Neutralisation der Carboxylgruppe mit handelsüblichen teritären Aminen erhalten.

In einer bevorzugten Ausführungsform stehen im Polymer **P** der Rest R¹ für H oder CH₃ und die Reste R², R³ und M, wie auch vorzugsweise R⁶ für H.
Die Struktureinheit **A** der Formel (I) stellt somit vorzugsweise eine Methacrylsäureeinheit oder eine Acrylsäureeinheit oder Analoga davon dar.

Vorzugsweise ist beim Polymer **P** für R¹³ die Reihenfolge von (R⁹O), (R¹⁰O) und (R¹¹O) zufällig, alternierend oder blockweise und (R⁹O) ≠ (R¹⁰O) ≠ (R¹¹O). Vorzugsweise steht R⁹ unabhängig voneinander für eine C₂-Alkylengruppe, R¹⁰ unabhängig voneinander für eine C₃-Alkylengruppe und R¹¹ unabhängig voneinander für eine C₄-Alkylengruppe.
Bei einem bevorzugten Polymer **P** sind mindestens 30 Mol-%, besonders bevorzugt 50 - 100 Mol-%, noch mehr bevorzugt 80-100 Mol-%, am meisten bevorzugt 100 Mol-% der Struktureinheit **B** der Formel (II) durch eine Struktur dargestellt bei der R⁹ eine C₂-Alkylengruppe darstellt und y = 0 und z = 0. Das heisst, R¹³ umfasst vorzugsweise mindestens 30 Mol-% (R⁹O)-Einheiten, vorzugsweise 50 bis 100 Mol-% (R⁹O)-Einheiten, noch mehr bevorzugt 80 bis 100 Mol-% (R⁹O)-Einheiten, bezogen auf die Gesamtmolmenge aller (R⁹O)-, (R¹⁰O)- und (R¹¹O)-Einheiten. Insbesondere bevorzugt umfasst R¹³ 100 Mol-% (R⁹O)-Einheiten, bezogen auf die Gesamtmolmenge aller (R⁹O)-, (R¹⁰O)- und (R¹¹O)-Einheiten. R¹² kann je nach Herstellverfahren des Polymers **P** für H, einen C₁ - C₁₂ Alkyl- oder Cycloalkylrest, einen C₇ - C₂₀ Alkylaryl- oder Aralkylrest, oder einen substituierten oder unsubstituierten Arylrest stehen. Wird das Polymer P über die polymeranaloge Reaktion hergestellt, ist R¹² vorzugsweise R^{12"}, insbesondere ein Methylrest, und steht nicht für ein Wasserstoffatom.

Die Reste R^{9'}, R^{10'} und R^{11'} beziehungsweise (R^{9'}O), (R^{10'}O) und (R^{11'}O) stehen unabhängig voneinander für Substituenten, wie sie für R⁹, R¹⁰ und R¹¹ beziehungsweise für (R⁹O), (R¹⁰O) und (R¹¹O) definiert sind.
Bei einem bevorzugten Polymer **P** wird die Struktureinheit **C** der Formel (III) durch eine Struktur dargestellt bei der R⁷ H bedeutet und R⁸ eine Verbindung der Formel (VI) bedeutet, wobei z = 0, R^{9'} eine C₂-Alkylengruppe darstellt und R^{10'} eine C₃-Alkylengruppe darstellt. Das heisst, R⁸ umfasst vorzugsweise mindestens 30 Mol-% (R^{9'}O)-Einheiten, vorzugsweise 50 bis 80 Mol-% (R^{9'}O)-Einheiten, noch mehr bevorzugt 60 bis 80 Mol-% (R^{9'}O)-Einheiten, und mindestens 10 Mol-% (R¹⁰'O)-Einheiten, vorzugsweise 20 bis 50 Mol-% (R¹⁰'O)-Einheiten, noch mehr bevorzugt 20 bis 40 Mol-% (R¹⁰'O)-Einheiten, bezogen auf die Gesamtmolmenge aller (R^{9'}O)- und (R^{10'}O)-Einheiten. Insbesondere bevorzugt umfasst R⁸ mindestens 70 Mol-% (R^{9'}O)-Einheiten und höchstens 30 Mol-% (R^{10'}O)-Einheiten, bezogen auf die Gesamtmolmenge aller (R^{9'}O)-, (R^{10'}O)- und (R^{11'}O)-Einheiten.

Die weitere Struktureinheit **D** kann eine weitere Amid- oder Estereinheit sein. Beispielsweise kann die Struktureinheit **D** eine Estereinheit sein, welche durch Umsetzung einer Mono- oder Dicarbonsäure mit einem Alkylalkohol, insbesondere einem C₆-C₂₀ Alkylalkohol hergestellt wird.

Ein besonders bevorzugtes Polmyer **P** umfasst oder besteht aus
a) m Mol-% mindestens einer Struktureinheit **A** der Formel (I'); 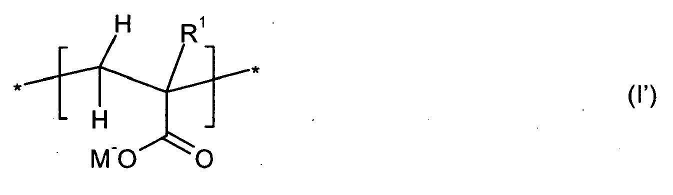
b) n Mol-% mindestens einer Struktureinheit **B** der Formel (II'); 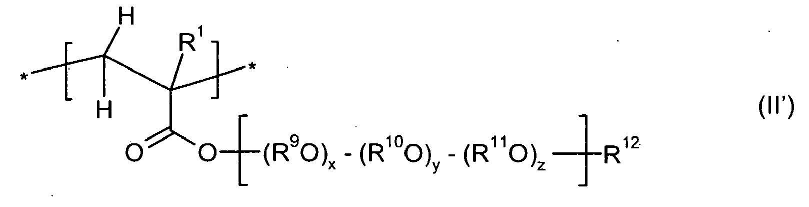 und
c) *o* Mol-% mindestens einer Struktureinheit C der Formel (III'); 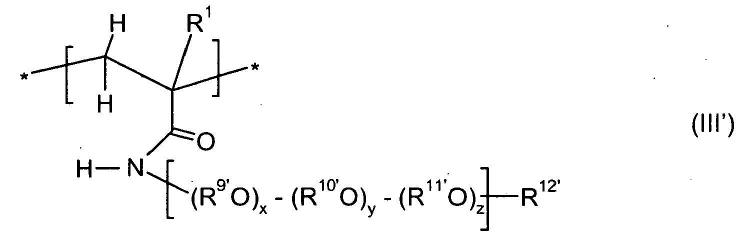
wobei R¹ für H oder einen Alkylrest, vorzugsweise einen Methylrest, steht,
wobei M ein H⁺, Na⁺, Ca⁺⁺/2, Mg⁺⁺/2, NH₄⁺ oder ein organisches Ammonium, vorzugsweise ein H⁺ darstellt,
wobei R⁹ und R^{9'} für eine Ethylengruppe stehen,
wobei R¹⁰ und R^{10'} für eine Propylengruppe stehen,
wobei R¹¹ und R^{11'} für eine Butylengruppe stehen,
wobei R¹² für eine C₁ bis C₁₂ Alkylgruppe, vorzugsweise eine Methylgruppe steht,
wobei x für 1 - 250, vorzugsweise 10 bis 100 steht, wobei y für 0 - 250, vorzugsweise für 0 bis 50 steht, wobei z für 0 bis 100, vorzugsweise für 0 steht, und
wobei m für eine Zahl von 50 - 95, vorzugsweise für 66 - 86, n für eine Zahl von 5 - 50, vorzugsweise für 14 - 34, und o für eine Zahl von 0.001 - 30, vorzugsweise für 0.01 - 1 steht.

Das Polymer **P** kann eine Kombination von verschiedenen Struktureinheiten der jeweiligen Struktureinheiten von **A**, **B**, **C** und **D** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Oder es können mehrere Estereinheiten **B** gemischt im Polymer **P** vorkommen, so zum Beispiel mehrere Estereinheiten **B** mit verschiedenen Substituenten R¹³. Bevorzugt ist beispielsweise die gemeinsame Verwendung von Polyalkylenglykolen, insbesondere von Polyethylenglykolen mit Polypropylenglykolen, oder die gemeinsame Verwendung von Polyalkylenglykolen, insbesondere von Polyethylenglykolen, mit unterschiedlichem Molekulargewicht. Es können auch mehrere Amideinheiten **C** im Polymer **P** vorliegen, insbesondere die Kombination von mindestens einer Einheit **C** mit R^{7'} und R^{8'} als Reste R⁷ und R⁸ mit mindestens einer Einheit **C** mit R^{7"} und R^{8"} als Reste R⁷ und R⁸.

In einer bevorzugten Ausführungsform umfasst das Polymer **P** 50 bis 95 Mol-%, vorzugsweise 66 bis 86 Mol-% der Struktureinheit **A** der Formel (I), 5 bis 50 Mol-%, vorzugsweise 14 bis 34 Mol-% der Struktureinheit **B** der Formel (II), 0.001 bis 30 Mol-%, vorzugsweise 0.01 bis 1 Mol-%, insbesondere bevorzugt 0.1 bis 1 Mol-%, der Struktureinheit **C** der Formel (III), und gegebenenfalls 0 bis 30 Mol-%, vorzugsweise 0 bis 1 Mol-% der Struktureinheit **D**, jeweils bezogen auf die Gesamtmolmenge der Struktureinheiten von **A**, **B**, **C** und **D** im Polymer P.

Die Abfolge der einzelnen Struktureinheiten **A**, **B**, **C** und **D** im Polymer **P** kann blockweise oder zufällig sein.

Das Polymer **P** weist vorzugsweise ein Molekulargewicht im Bereich von 1'000 - 150'000 g/mol, vorzugsweise 10'000 - 100'000 g/mol, bevorzugt 30'000 - 80'000 g/mol, besonders bevorzugt 40'000 - 70'000 g/mol auf.

Das Polymer **P** kann auf verschiedene Arten hergestellt werden. Es sind im Wesentlichen drei Verfahren im Einsatz. In einem ersten Verfahren werden die Polymere in einer sogenannten polymeranalogen Umsetzung aus einem Polycarboxylpolymer und den jeweiligen Alkoholen und Aminen hergestellt. Bei einem zweiten Verfahren werden im ersten Schritt bei der polymeranalogen Umsetzung neben Ester- und eventuell Amidgruppen auch Anhydridgruppen gebildet, und in einem zweiten Schritt werden die im ersten Schritt gebildeten Anhydridgruppen mit einer Aminverbindung zu einem Amid umgesetzt. In einem dritten Verfahren werden die Polymere aus den jeweiligen ungesättigten Carbonsäure-, Ester- und Amid-funktionenellen Monomeren durch radikalische Polymerisation hergestellt.

Besonders bevorzugte Polymere werden nach der polymeranalogen Reaktion gemäss dem ersten Verfahren hergestellt. Die polymeranaloge Umsetzung weist den grossen Vorteil auf, dass aus kommerziell erhältlichen Polymeren aus α-,β-ungesättigten Mono- oder Dicarbonsäuren, speziell aus Poly(meth)acrylsäuren, durch Variation der Menge, der Art und dem Verhältnis von Alkohol und Amin, in einfacher und sicherer Weise sehr unterschiedliche Kammpolymere mit sehr unterschiedlichen Eigenschaften erhalten werden können. Solche polymeranaloge Umsetzungen sind beispielsweise in WO97/35814A1, WO95/09821A2, DE 100 15 135A1, EP 1138697A1, sowie EP1348729A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polymer **P** kann auch in festem Aggregatszustand erhalten werden, wie in EP 1 348 729 A1 auf Seite 3 bis Seite 5 sowie in dessen Beispielen beschrieben.

Es wird also bevorzugt ein Polymer **P** verwendet, wobei das Polymer **P** erhältlich ist durch die Reaktion von
(a) mindestens einer Polycarbonsäure oder einem Analogon einer Polycarbonsäure; und
(b) mindestens einer Monohydroxyverbindung **E** der Formel (VII)

   HO-[(R⁹O)ₓ-(R¹⁰O)_{y}-(R¹¹O)_{z}]-R^{12"} (VII)

   und
(c) mindestens einer Monoaminverbindung **F** der Formel (VIII)

   R^{7'}-NH-R^{8'} (VIII)

   und gegebenenfalls
(d) mindestens einer weiteren Verbindung **G**.

Unter Polycarbonsäure oder Analogon einer Polycarbonsäure versteht man ein Homo- oder Copolymer, welches durch Polymerisation von mindestens einem Monomer **a** und gegebenenfalls mindestens einem Monomer **b** erhalten werden kann. Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Unter Analogon einer Mono- oder Dicarbonsäure oder Polycarbonsäure versteht man im Sinne der vorliegenden Erfindung Säuresalze, Säurehalogenide, Säureanhydride und Säureester, im besonderen Alkyl-Säureester.
Monomer **b** ist vorzugsweise ausgewählt aus der Gruppe von ethylenisch ungesättigten Monomeren umfassend α- β-ungesättigte Mono- oder Dicarbonsäuren, α- β-ungesättigte Mono- oder Dicarbonsäureester, α- β-ungesättigte Carboxylate, Styrol, Ethylen, Propylen, Vinylacetat insbesondere Methacrylsäure, Acrylsäure, Crotonsäure, Itaconsäure, Maleinsäure, Fumarsäure, sowie deren Salze, Ester und Mischungen davon.
Bevorzugt als Copolymer ist ein Copolymer aus Acrylsäure und Methacrylsäure sowie deren Salze oder Teilsalze.
Bevorzugt als Homopolymer ist Polymethacrylsäure oder Polyacrylsäure, insbesondere Polymethacrylsäure, deren Salze oder Teilsalze.

Die Polycarbonsäure oder das Analogon der Polycarbonsäure kann hierbei als freie Säure oder als Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Bei der Herstellung der Polycarbonsäure oder des Analogons der Polycarbonsäure sind allenfalls verwendete Initiatoren, CoInitiatoren und Polymerisationsregler gegebenenfalls so zu wählen, dass in Polymer **P** vorzugsweise keine reaktionsfähigen Hydroxyl- oder Aminfunktionen vorhanden sind.

Unter "Monohydroxy-Verbindung" wird hier und im folgenden eine Substanz verstanden, die nur eine freie Hydroxylgruppe aufweist.
Unter "Monoamin-Verbindung" wird hier und im folgenden eine Substanz, die nur eine freie Aminogruppe aufweist, oder Ammoniak als Gas oder als wässrige Lösung, verstanden.
Unter ,Molekulargewicht' oder ,Molgewicht' versteht man im Sinne der Erfindung das Molekulargewichtsmittel M_{w}.
Unter "(Meth)acrylsäure" wird im gesamten vorliegenden Dokument sowohl Acrylsäure als auch Methacrylsäure verstanden.

Das Homo- oder Copolymer der Polycarbonsäure oder des Anologons der Polycarbonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Die Polymerisation erfolgt vorteilhaft unter derartigen Bedingungen, dass das gebildeten Homo- oder Copolymere aus 10 bis 250, bevorzugt 20 bis 100, mehr bevorzugt 25 bis 60, Monomerbausteinen aufgebaut ist. Solche Homo- oder Copolymere von (Meth)acrylsäure sind kommerziell erhältlich. Das Homo- oder Copolymer der Polycarbonsäure oder des Anologons der Polycarbonsäure weist vorzugsweise ein Molekulargewicht M_{w} von 500 bis 20'000 g/mol, bevorzugt von 2'000 bis 10'000 g/mol, insbesondere bevorzugt von 3'500 bis 6'500 g/mol, auf.

Die Monohydroxy-Verbindung **E** ist vorzugsweise mit unter üblichen Reaktionsbedingungen nicht reaktiven Endgruppen einseitig abgeschlossen. Bevorzugt handelt es sich hierbei um ein Polymer mit einem Polyalkylenglykol-Grundgerüst. Die Monohydroxy-Verbindung **E** weist die Formel (VII) auf

HO-[(R⁹O)ₓ-(R¹⁰O)_{y}-(R¹¹O)_{z}]-R^{12"} (VII)

wobei R⁹, R¹⁰ und R¹¹ je unabhängig voneinander eine C₂ - C₄ Alkylengruppe bedeutet mit einer Reihenfolge der (R⁹O)-, (R¹⁰O)-, und (R¹¹O)-Einheiten in irgendeiner möglichen Sequenz; wobei R^{12"} für einen C₁ - C₁₂ Alkyl- oder Cycloalkylrest, einen C₇ - C₂₀ Alkylaryl- oder Aralkylrest, oder einen substituierten oder unsubstituierten Arylrest steht; und wobei x, y, z unabhängig voneinander je die Werte 0 - 250 aufweisen und x+y+z = 3 - 250 ist.
Bevorzugt sind Monohydroxy-Verbindungen **E** der Formel (VII) mit einer Methyl-, Ethyl-, i-Propyl- oder n-Butylgruppe, insbesondere mit einer Methylgruppe, als Substituent R^{12"} sowie mit z=0. Vorzugsweise steht R⁹ unabhängig voneinander für eine C₂-Alkylengruppe und R¹⁰ unabhängig voneinander für eine C₃-Alkylengruppe. Bevorzugt handelt es sich bei E um Mischpolymerisate aus Ethylenoxid/Propylenoxid, mehr bevorzugt um einseitig endgruppenverschlossenes Polyethylenglykol.
Mischungen mehrerer unterschiedlicher Verbindungen der Gruppe E sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymeren aus Ethylenoxid und Propylenoxid oder einseitig endgruppenverschlossenen Polypropylenglykolen verwendet werden.

Unter ,mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei ,einseitig abgeschlossen' Verbindungen ist nur eine Seite nicht mehr zur Reaktion fähig.

In einer bevorzugten Ausführungsform ist die Monohydroxy-Verbindung **E** ein einseitig endgruppenverschlossenes Polyalkylenglykol mit einem Molekulargewicht M_{w} von 300 bis 10'000 g/mol, insbesondere von 500 bis 5000 g/mol, bevorzugt von 800 bis 3000 g/mol. Insbesondere geeignet ist auch eine Mischung von einseitig endgruppenverschlossenen Polyalkylenglykolen mit unterschiedlichem Molekulargewicht, beispielsweise die Mischung von Polyalkylenglykolen mit einem Molekulargewicht von 1'000 g/mol mit Polyalkylenglykolen mit einem Molekulargewicht von 3'000 g/mol.

Zusätzlich zur Monohydroxy-Verbindung **E** wird im ersten und gegebenenfalls im zweiten Verfahren eine Monoaminverbindung **F** eingesetzt. Dadurch erfolgt neben der Bildung von Estergruppen die Bildung von Amidgruppen. Erfolgt die Herstellung des Polymers **P** nach dem ersten Verfahren durch die sogenannte polymeranaloge Umsetzung, weist die Monoaminverbindung **F** vorzugsweise einen Siedepunkt und Flammpunkt auf, der höher liegt als die Reaktionstemperatur der Polycarbonsäure mit der Monohydroxy-Verbindung **E**. Weiterhin enthält die Monoaminverbindung **F** vorzugsweise keine Hydroxylgruppen.

Typische Beispiele solcher Monoaminverbindungen **F** lassen sich durch die Formel (VIII) darstellen

R^{7'}-NH-R^{8'} (VIII)

Einerseits können R^{7'} und R^{8'} zusammen einen Ring bilden, der gegebenenfalls Sauerstoff-, Schwefel- oder weitere Stickstoffatome enthält.
Beispiele für solche Monoaminverbindungen **F** sind insbesondere 9H-Carbazol, Indolin oder Imidazol.
Andererseits können R^{7'} und R^{8'} unabhängig voneinander H, eine C₈-C₂₀ Alkylgruppe, eine C₅ - C₉ Cycloalkyl-Gruppe, eine C₇- C₁₂ Aralkyl-Gruppe, oder eine Verbindung der Formel (IV), (V) oder (VI) darstellen.

-R¹⁴-X(R¹⁵)ᵣ (IV)

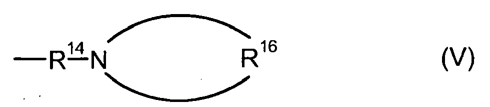

-[(R^{9'}O)_{x'}-(R^{10'}O)_{y'}-(R^{11'}O)_{z'}-]- R^{12'} (VI)

R¹⁴ stellt hierbei unabhängig voneinander eine Alkylengruppe, vorzugsweise eine C1- bis C4-Alkylengruppe, und R¹⁵ eine C₁- bis C₄-Alkylgruppe dar. X ist unabhängig voneinander ein S, O oder N dar, wobei r = 1, falls X= S oder O, und r = 2, falls X = N. R¹⁶ stellt eine Alkylengruppe mit gegebenenfalls Heteroatomen dar, und bildet mit dem Stickstoffatom einen 5- er- bis 8-er-Ring, insbesondere einen 6-er-Ring.
Die Substituenten R^{9'}, R^{10'}, R^{11'} und R^{12'} beziehungsweise die Indizes x', y' und z' weisen unabhängig voneinander die selben Bedeutungen auf wie sie bereits für R⁹, R¹⁰, R¹¹ und R¹² beziehungsweise x, y und z der Formel (VII) definiert wurden.
Beispiele für solche Monoaminverbindungen **F** sind Dioctylamin, Distearylamin, Ditalgfettamin, Fettamine wie Stearylamin, Cocosfettamin, Octadecylamin, Talgfettamin, Oleylamin; 3-Butoxy-propylamin, Bis(2-methoxyethyl)-amin; α-Methoxy-ω-Amino-Polyoxyethylen, α-Methoxy-ω-Amino-Polyoxypropylen, α-Methoxy-ω-Amino-Oxyethylene-Oxypropylen-Copolymer.
Vorzugsweise ist die Monoaminverbindung **F** ein primäres Monoamin. Besonderes bevorzugt als Monoaminverbindungen **F** sind α-Methoxy-ω-Amino-Oxyethylen-Oxypropylen-Copolymere, wie beispielsweise Jeffamin® M-2070, oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/oder Propylenoxid gefolgt von Umwandlung der terminalen Alkoholgruppe in eine Amingruppe.

Als weitere Verbindung **G** ist eine Verbindung bevorzugt, welche mit der Polycarbonsäure oder dem Analogon der Polycarbonsäure eine Reaktion eingehen kann. Beispiele für eine Verbindung **G** sind weitere Amine oder Alkohole, beispielsweise ein C₆-C₂₀ Alkylalkohol oder ein weiteres Mono- oder Diamin. Es können auch mehrere verschiedene Verbindungen **G** eingesetzt werden.

Die Umsetzung der Polycarbonsäure oder dem Analogon der Polycarbonsäure mit mindestens einer Monohydroxy-Verbindung **E** und mit mindestens einer Monoaminverbindung **F**, und gegebenenfalls einer Verbindung **G**, zu einem Polymer **P** erfolgt bei der polymeranalogen Reaktion typischerweise derart, dass zur Polycarbonsäure oder dem Analogon der Polycarbonsäure unter Rühren die mindestens eine Monohydroxy-Verbindung **E** zugegeben wird und auf die Umsetzungstemperatur aufgeheizt wird. Die Mischung wird bei der oben beschriebenen Umsetzungstemperatur weitergerührt und eventuell unter Vakuum oder durch Über- oder Durchleiten eines Gasstromes über beziehungsweise durch die Reaktionsmasse umgesetzt. Die Temperatur für diese Umsetzung ist beispielsweise zwischen 140°C und 200°C. Die Reaktion ist aber auch bei Temperaturen zwischen 150°C und 175°C möglich. Falls eine Monoaminverbindung **F** eingesetzt wird, kann deren Zugabe gleichzeitig mit der Monohydroxy-Verbindung **E** oder aber zu einem späteren Zeitpunkt während dieses Reaktionsschrittes erfolgen.
In einer bevorzugten Ausführungsform wird diese Umsetzung in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.
Die Umsetzung kann mittels Messung der Säurezahl, beispielsweise durch Titration, verfolgt werden und bei einer gewünschten Säurezahl, so dass das gewünschte Verhältnis von Carbonsäure zu Ester- bzw. Amidgruppen erreicht wird, abgebrochen werden. Die Reaktion wird durch Aufheben des Vakuums und Abkühlen abgebrochen.

In einer bevorzugten Ausführungsform wird eine Polymethacrylsäure mit einem Polyethylenglykol welches einseitig mit einer Methoxygruppe abgeschlossen ist, verestert und mit einem Monoamin, insbesondere einem Polyethermonoamin, umgesetzt.

Bei einem zweiten Verfahren werden in einem ersten Schritt gemäss der sogenannten polymeranalogen Reaktion neben Estergruppen und gegebenenfalls Amidgruppen auch Anhydridgruppen gebildet und in einem zweiten Schritt werden die im ersten Schritt gebildeten Anhydridgruppen vollständig oder teilweise mit einer Aminverbindung zu einem Amid umgesetzt. Solche Verfahren werden beispielsweise in WO2005/090416A1 beschrieben.
Der erste Schritt erfolgt vorzugsweise wie bei dem für die polymeranalogen Umsetzung beschriebenen Herstellungsverfahren.

Falls im ersten Schritt des zweiten Verfahrens bereits Aminverbindungen eingesetzt werden, sind insbesondere Aminverbindungen, wie sie für die Monoaminverbindung F beschrieben wurden, bevorzugt.

Die Monoaminverbindung **F** weist in diesem Fall einen Siedepunkt und Flammpunkt auf, der höher liegt als die Reaktionstemperatur des ersten Schrittes. Weiterhin darf die Monoaminverbindung **F** keine Hydroxylgruppen enthalten.
Bevorzugt werden im ersten Schritt keine Amine verwendet.

In einem zweiten Schritt des zweiten Verfahrens wird das im ersten Schritt gebildete Polymer, welches Anhydridgruppen neben Estergruppen und gegebenenfalls Amidgruppen aufweist, mit einer Aminverbindung F' bei Temperaturen unter 60 °C, vorzugsweise unter 40°C umgesetzt. Bevorzugt erfolgt die Umsetzung zwischen 10°C und 60°C, besonders bevorzugt zwischen 15 und 40°C, noch mehr bevorzugt zwischen 20 und 30°C. Diese Umsetzung ist unter schonenden Bedingungen realisierbar und bedarf keines Vakuums, so dass auch Aminverbindungen **F**' mit einem tiefen Siedepunkt oder aber Aminverbindungen **F**', welche zusätzlich zur Aminogruppe auch noch Hydroxylgruppen enthalten, eingesetzt werden können.

Erfolgt die Herstellung des Polymers **P** nach diesem zweiten Verfahren, lassen sich typische Beispiele geeigneter Aminverbindungen **F**' für den zweiten Schritt durch die Formel (VIII') darstellen

R^{7"}-NH-R^{8"} (VIII')

Einerseits können R^{7"} und R^{8"} zusammen einen Ring bilden, der gegebenenfalls Sauerstoff-, Schwefel- oder weitere Stickstoffatome enthält.
Beispiele für solche Aminverbindungen **F**' sind insbesondere 9H-Carbazol, Indolin, Piperidin, Morpholin, Pyrrolidin, 1,3-Thiazolidin, 2,3 -Dihydro-1,3-thiazol, Imidazol. Besonders geeignet ist Morpholin.
Andererseits können R^{7"} und R^{8"} unabhängig voneinander H, eine C₁-C₁₂ Alkylgruppe, eine C₅- C₉ Cycloalkyl-Gruppe, eine C₇- C₁₂ Aralkyl-Gruppe, eine Hydroxyalkylgruppe, insbesondere -CH₂CH₂-OH oder -CH₂CH(OH)CH3, oder eine Verbindung der Formel (IV), (V) oder (VI) darstellen.

-R¹⁴-X(R¹⁵)ᵣ (IV)

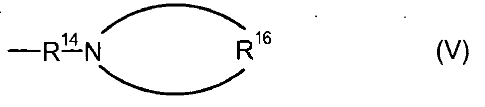

-[(R^{9'}O)_{x'}-(R^{10'}O)_{y'}-(R^{11'}O)_{z'}]- R^{12'} (VI)

R¹⁴ stellt hierbei unabhängig voneinander eine Alkylengruppe, vorzugsweise eine C1- bis C4-Alkylengruppe, und R¹⁵ eine C₁- bis C₄-Alkylgruppe dar. X ist unabhängig voneinander ein S, O oder N, wobei r = 1, falls X= S oder O, und r = 2, falls X = N. R¹⁶ stellt eine Alkylengruppe mit gegebenenfalls Heteroatomen dar, und bildet mit dem Stickstoffatom einen 5- er- bis 8-er-Ring, insbesondere einen 6-er-Ring.
Die Substituenten R^{9'}, R^{10'}, R^{11'} und R^{12'} beziehungsweise die Indizes x', y' und z' weisen unabhängig voneinander die selben Bedeutungen auf wie sie bereits für R⁹, R¹⁰, R¹¹ und R¹² beziehungsweise x, y und z der Formel (VII) definiert wurden.

Als Hydroxyalkylgruppe bevorzugt ist die Gruppe -CH₂CH₂-OH oder -CH₂CH(OH)CH₃.
Geeignete Aminverbindungen **F**' sind beispielsweise Ammoniak, Butylamin, Hexylamin, Octylamin, Decylamin, Diethylamin, Dibutylamin, Dihexylamin, Cyclopentylamin, Cyclohexylamin, Cycloheptylamin und Cyclooctylamin, Dicyclohexylamin; 2-Phenyl-ethylamin, Benzylamin, Xylylamin; N,N-Dimethyl-ethylendiamin, N,N-Diethylethylendiamin, 3,3'-Iminobis(N,N-dimethylpropylamin), N,N-Dimethyl-1,3-propandiamin, N,N-Diethyl-1,3-propandiamin, N,N,N'-Trimethyl-ethylendiamin, 2-Methoxy-ethylamin, 3-Methoxy-propylamin; Ethanolamin, Isopropanolamin, 2-Aminopropanol, Diethanolamin, Diisopropanolamin, N-isopropyl-ethanolamin, N-Ethyl-ethanolamin, N-Butyl-ethanolamin, N-Methyl-ethanolamin, 2-(2-aminoethoxy)ethanol; 1-(2-Aminoethyl)-piperazin, 2-Morpholino-ethylamin, 3-Morpholino-propylamin.

Besonders bevorzugt ist die Aminverbindung **F**' ausgewählt aus der Gruppe umfassend Morpholin, 2-Morpholin-4-yl-ethylamin, 2-Morpholin-4-yl-propylamin, N,N-Dimethylaminopropylamin, Ethanolamin, Diethanolamin, 2-(2-aminoethoxy)ethanol, Dicyclohexylamin, Benzylamin, 2-Phenyl-ethylamin, N-(2-Hydroxyethyl)ethylendiamin, sowie andere Amine, welche beispielsweise von der Firma Huntsman unter dem Namen Jeffamine® vertrieben werden, sowie Mischungen davon.

In einer bevorzugten Ausführungsform wird eine Polymethacrylsäure mit einem Polyethylenglykol welches einseitig mit einer Methoxygruppe abgeschlossen ist, verestert und anschliessend schonend mit Mono- oder Diethanolamin umgesetzt.

In einem dritten Herstellverfahren wird das Polymer **P** über die radikalische Polymerisation hergestellt. Der Weg über die radikalische Polymerisation ist die gängigste Methode, sie ist allerdings bei speziellen Verbindungen erschwert durch die kommerzielle Verfügbarkeit der entsprechenden Monomere und bedarf einer aufwändigen Prozesskontrolle.

Die Erfindung betrifft daher zusätzlich die Verwendung eines Polymers **P** als Dispergiermittel, insbesondere als Verflüssiger, für Gipszusammensetzungen, wobei das Polymer **P** erhältlich ist durch die Polymerisationsreaktion in Gegenwart von mindestens einem Radikalbildner von
(a) mindestens einer ethylenisch ungesättigten Mono- oder Dicarbonsäure **M** oder einem Analogon von einer ungesättigten Mono- oder Dicarbonsäure; mit
(b) mindestens einem ethylenisch ungesättigten Carbonsäurederivat **H** der Formel (IX); 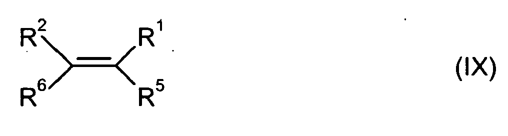 und
(c) mindestens einem zweiten ethylenisch ungesättigten Carbonsäurederivat **K** der Formel (X); 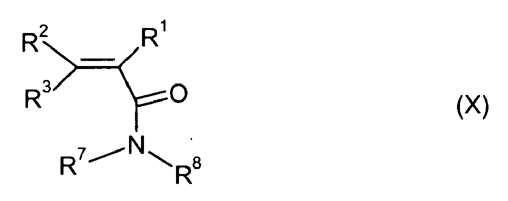 und gegebenenfalls
(d) mindestens einer weiteren ethylenisch ungesättigten Verbindung L.

Die Substituenten R¹, R², R³, R⁵, R⁶, R⁷ und R⁸ weisen unabhängig voneinander je dieselben Bedeutungen auf, wie sie bereits für die Formel (II) beziehungsweise (III) beschrieben wurden.

Die ethylenisch ungesättigte Mono- oder Dicarbonsäure **M** oder das Analogon der ungesättigten Mono- oder Dicarbonsäure ist vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Besonders bevorzugt ist die Methacrylsäure. Unter Analogon einer Mono- oder Dicarbonsäure versteht man im Sinne der vorliegenden Erfindung Säuresalze, Säurehalogenide, Säureanhydride und Säureester, im besonderen Alkyl-Säureester.

Das mindestens eine ethylenisch ungesättigte Carbonsäurederivat **H** der Formel (IX) ist vorzugsweise ein Carbonsäureester, besonders bevorzugt ein Acrylsäureester oder ein Methacrylsäureester. Beispiele für solche Ester sind Polyalkylenglykol(meth)acrylate. Es können mehrere Monomere der Formel (IX) mit verschiedenen Substituenten R⁵ in Kombination miteinander verwendet werden. Bevorzugt ist beispielsweise die gemeinsame Verwendung von Polyalkylenglykolen, insbesondere von Polyethylenglykolen, mit unterschiedlichem Molekulargewicht.

Das zweite ethylenisch ungesättigte Carbonsäurederivat **K** der Formel (X) ist ein Carbonsäureamid. Als geeignete Carbonsäureamide können Amide von ethylenisch ungesättigten Mono- oder Dicarbonsäuren mit Aminverbindungen **F**' der Formel (VIII'), insbesondere von Monoaminverbindungen **F** der Formel (VIII), eingesetzt werden. Besonders bevorzugt sind Amide der (Meth)acrylsäure, vorzugsweise die Polyoxyalkylenmonoamide. Besonders bevorzugte Amid-Monomere sind die Alkylpolyalkylenglycol(meth)acrylamide, besonders bevorzugt die Methylpolyethylenglycol(meth)acrylamide, die Methylpolyethylenglycolpolypropylenglycol(meth)acrylamide oder die Methylpolypropylenglycol(meth)-acrylamide. Beispiele für ungesättigte Carbonsäureamide von Aminen der Formel (VIII') sind vorzugsweise Mono- oder Di-hydroxyethyl(meth)acrylamid, Mono- oder Di-hydroxypropyl(meth)acrylamid, Mono- oder Di-cyclohexyl-(meth)acrylamid oder N-Alkyl,-N-hydroxyethyl(meth)acrylamide oder N-Alkyl,-N-hydroxypropyl(meth)acrylamide.
Es können ein oder mehrere dieser ungesättigten Carbonsäureamide verwendet werden.

Das Polymer **P** kann zur erfindungsgemässen Verwendung sowohl in flüssiger als auch in fester Form, sowohl allein oder als Bestandteil eines Dispergiermittels, insbesondere eines Verflüssigers verwendet werden.
Das Polymere **P** können somit für die erfindungsgemässe Verwendung als Dispergiermittel für Gipszusammensetzungen als einfaches Polymer **P** oder als Mischungen mehrerer Polymere **P** verwendet werden. Es können aber auch Polymere **P** mit anderen Dispergiermitteln oder Dispergiermittelmischungen verwendet werden. Die Polymere **P** oder Mischungen, die die Polymere **P** enthalten, können zur erfindungsgemässen Verwendung weitere Bestandteile enthalten. Beispiele für weitere Bestandteile sind Lösungsmittel oder Additive, wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner.
Je nach Herstellverfahren oder Reaktionsführung kann das Dispergiermittel zudem zusätzlich zum Polymer **P** freie Verbindungen der Ausgangsstoffe, insbesondere freie Monohydroxyverbindungen wie beispielsweise Polyalkylenglykol, insbesondere freies Polyethylenglykol, enthalten.

Falls das Polymer **P** in flüssiger Form verwendet wird, wird für die Umsetzung vorzugsweise ein Lösungsmittel eingesetzt. Bevorzugte Lösungsmittel sind beispielsweise Hexan, Toluol, Xylol, Methylcyclohexan, Cyclohexan oder Dioxan sowie Alkohole, insbesondere Ethanol oder Isopropanol, und Wasser, wobei Wasser das am meist bevorzugte Lösungsmittel ist.
Das Polymer **P** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen.
Falls das Amin gemäss dem zweiten Verfahren erst in einem zweiten Schritt dazugegeben wird, kann beispielsweise das Amin in einem Lösungsmittel, bevorzugt Wasser, vorgelegt werden und das Produkt aus dem ersten Reaktionsschritt kann als Polymerschmelze oder aber in fester Form, etwa als Pulver oder in Form von Schuppen, oder eines Granulates unter Rühren zugegeben werden. Bei Benutzung von Lösungsmittel in der zweiten Stufe kann, falls dies gewünscht ist, das Lösungsmittel wieder entfernt werden, beispielsweise durch Anlegen eines Vakuums und/oder Heizen, oder es kann noch weiter verdünnt werden. Es ist auch möglich, dass auch das Amin im festen Aggregatszustand oder in oder auf einem Trägermaterial vorliegt.

Das Polymer **P** wird bevorzugt in einer Menge von 0.01 bis 10 Gew.-% bezogen auf das Gewicht des Bindemittels verwendet, um in der Gipszusammensetzung die gewünschte Wirkung zu erzielen. Es können auch mehrere Polymere **P** gemischt verwendet werden, um die gewünschte Wirkung zu erzielen.

In einem weiteren Aspekt betrifft die vorliegende Erfindung ein Bindemittel enthaltendes Gemisch umfassend Gips und mindestens ein Polymer **P**. Das Polymer **P** wurde bereits vorgängig beschrieben.
Zum Term "Gips" wird jede bekannte Form von Gips gezählt, insbesondere Calciumsulfat-Dihydrat, Calciumsulfat-α-Halbhydrat, Calciumsulfat-β-Halbhydrat oder Calciumsulfat-Anhydrit.
Das Bindemittel enthaltende Gemisch enthält mindestens 30 Gew.-%, bevorzugt mindestens 50 Gew.-%, am meisten bevorzugt mindestens 80 Gew.-%, Gips, bezogen auf das Gesamtgewicht des Bindemittels. Das Bindemittel kann weitere hydraulisch abbindende Substanzen enthalten, wie beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.
Weiterhin kann das Gemisch weitere Zuschlagstoffe wie Sand, Kies, Steine, Quarzmehl, Kreiden sowie als Additive übliche Bestandteile wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner enthalten.

In einem weiteren Aspekt betrifft die vorliegende Erfindung ein Verfahren zur Herstellung eines Bindemittels enthaltenden Gemisches wobei das mindestens eine Polymer **P** getrennt oder als Zusatzmittel vorgemischt in fester oder flüssiger Form dem Bindemittel zugegeben wird.

Besonders geeignet ist die Zugabe des Polymers **P** in fester Form. So kann das Polymer **P** im festen Aggregatszustand ein Bestandteil einer Gipszusammensetzung, einer sogenannten Trockenmischung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.
Das Polymer **P** kann auch einer üblichen Gipszusammensetzung mit oder kurz vor oder kurz nach der Zugabe des Wassers beigegeben werden. Als besonders geeignet gezeigt hat sich hierbei die Zugabe des Polymers **P** in Form einer wässrigen Lösung oder Dispersion, insbesondere als Anmachwasser oder als Teil des Anmachwassers. Die Herstellung der wässrigen Lösung oder Dispersion erfolgt durch Zusetzen von Wasser bei der Herstellung des Polymers **P** oder durch nachträgliches Vermengen von Polymer **P** mit Wasser. Typischerweise beträgt dabei der Anteil des Polymeren **P** 10 bis 90 Gewichts-%, insbesondere 20 bis 50 Gew.-%, bezogen auf das Gewicht der wässrigen Lösung oder Dispersion. Je nach Art des Polymers **P** entsteht eine Dispersion oder eine Lösung. Bevorzugt wird eine Lösung.
Die wässrige Lösung oder Dispersion kann weitere Bestandteile enthalten. Beispiele hierfür sind Lösungsmittel oder Additive, wie sie in der Bauchemie geläufig sind, insbesondere oberflächenaktive Stoffe, Stabilisatoren gegen Hitze und Licht, Farbstoffe, Entschäumer, Beschleuniger, Verzögerer, Schaumbildner.

Das Polymer **P** verfügt über besonders gute Eigenschaft als Dispergiermittel, insbesondere als Verflüssiger, für Gipsuzammensetzungen, das heisst, dass die resultierende Mischung ein bedeutend grösseres Fliessverhalten aufweist im Vergleich zu einer Zusammensetzung ohne das Dispergiermittel, ohne dass das Erstarren deutlich verzögert wird. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten Gipszusammensetzung stark erhöht sind.

Das Polymer **P** hat somit als Dispergiermittel, insbesondere als Verflüssiger, hervorragende Eigenschaften in Systemen, welche überwiegend sulfatische Bindemittel enthalten. Zudem sind mit dem Polymer **P** Zusammensetzungen möglich, die sich nicht verfärben.

### Beispiele

Die Erfindung wird nun anhand von Beispielen näher erläutert.

### 1. Verwendete Polymere P

**Tabelle 1 Verwendete Abkürzungen.**

| **Abkürzung** | **Bedeutung** | **Mw*** |
|---|---|---|
| PEG1000 | Polyethylenglykol ohne terminale OH-Gruppen | 1000 g/mol |
| PEG3000 | Polyethylenglykol ohne terminale OH-Gruppen | 3000 g/mol |
| EO/PO(70/30)2000 | Block-Copolymer aus Ethylenoxid und Propylenoxid im Verhältnis 70:30 ohne terminale OH-Gruppen | 2000 g/mol |

*Mw = mittleres Molekulargewicht

Es wurden die in Tabelle 2 angegebenen Polymere **P-1** und **P-2** mittels polymeranaloger Umsetzung aus Poly(meth)acrylsäure mit den korrespondierenden Alkoholen und Aminen nach bekannter Art und Weise hergestellt. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen.
Das Polymer **P-3** wurde über die radikalische Copolymerisation hergestellt, wie beispielsweise in EP 1 136 508 A1, z.B. in Beispiel 1, beschrieben.
Die Vergleichsbeispiele **N-1** bis **N-5** wurden in gleicher Weise wie die Polymere **P-1** und **P-2** hergestellt.

Vergleichsbeispiel **N-6** ist ein kommerziell erhältlicher, auf Melamin Basis hergestellter Verflüssiger (Melment® F15G von BASF).

**Tabelle 2 Erfindungsgemässe Polymere P-1, P-2 und P-3 bzw. Vergleichspolymere N-1 bis N-5 entsprechen der Formel (I), (II) bzw. (III) mit R²=H, R³=H, R⁶=H, R⁷=H, M= H⁺, Na⁺;**

| Nr. | R¹ | R¹³ | | R⁸ | Mol-% | Mw | *m*/ *(n+o+p)* |
|---|---|---|---|---|---|---|---|
| P-1 | -CH3 | -PEG1000-OCH3: -PEG3000-OCH3 | 50: 50* | -EO/PO(70/30)2000-OCH3 | *m* = 79.6 *n* = 20.2 *o* = 0.2 *p* = 0 | 45'000 | 3.77 |
| P-2 | -CH3 | -PEG1000-OCH3: -PEG3000-OCH3 | 45: 55* | -EO/PO(70/30)2000-OCH3 | *m* = 74.5 *n* = 25.3 *o* = 0.2 *p* = 0 | 60'000 | 2.95 |
| P-3 | -CH3 | -PEG1000-OCH3 | | -EO/PO(70/30)2000-OCH3 | *m* = 76.7 *n* = 23.1 *o* = 0.2 *p* =0 | 30'000 | 3.3 |
| N-1 | -H | -PEG1000-OCH3 | | -EO/PO(70/30)2000-OCH3 | *m* = 59.8 *n* = 40 *o* = 0.2 *p* = 0 | 25'000 | 1.5 |
| N-2 | -CH3 | -PEG1000-OCH3 | | -EO/PO(70/30)2000-OCH3 | *m* = 63.8 *n* = 36 *o* = 0.2 *p* = 0 | 35'000 | 1.87 |
| N-3 | -H | -PEG1000-OCH3 -PEG3000-OCH3 | | -EO/PO(70/30)2000-OCH3 | *m* = 86.5 *n* = 13.3 *o* = 0.2 *p* = 0 | 30'000 | 6.4 |
| N-4 | -CH3 | -PEG3000-OCH3 | | -EO/PO(70/30)2000-OCH3 | *m* = 86.5 *n* = 13.3 *o* = 0.2 *p* = 0 | 35'000 | 6.4 |
| N-5 | -CH3 | -PEG1000-OCH3: -PEG3000-OCH3 | | -EO/PO(70/30)2000-OCH3 | *m =* 64 *n* = 35.8 *o* = 0.2 *p* = 0 | 72'000 | 1.86 |

| | | | | | | | |
|---|---|---|---|---|---|---|---|
| * bedeutet Molverhältnis der verschiedenen R¹³ Seitenketten | | | | | | | |

### 2.1 Fliessverhalten in reinen Gipszusammensetzungen

Es wurde eine Gipszusammensetzung mit einem Wasser/Feststoffverhältnis von 0.24 hergestellt mit 65 Gew.-% Calciumsulfat-α-Halbhydrat, 31.7 Gew.-% Quarzsand mit einer Korngrösse von 0-0.4 mm, sowie Verflüssiger in einer gemäss Tabelle 3 definierten Menge. Der Verflüssiger wurde gleichzeitig bei der Zugabe des Anmachwassers dazugegeben. Zusätzlich enthält die Gipsmörteltrockenmischung Additive, wie Entschäumer, Verdicker, Dispersionspulver und Stabilisator. Die Gew.-% sind jeweils bezogen auf das Gesamtgewicht der Gipsmörteltrockenmischung. Die Gew.-Prozentangaben des Verflüssigers beziehen sich jeweils auf den Feststoffgehalt der Polymere **P** bzw. der Verflüssiger bezogen auf das Gesamtgewicht der Gipsmörteltrockenmischung (ohne Wasser).

Zur Untersuchung des Fliessverhaltens wurde das Ausbreitmass (ABM) in Millimeter nach 3 Minuten (min) beziehungsweise 20 Minuten bestimmt. Die Untersuchungen wurden nach EN 196-1, EN 459-2, EN 13454-1 und 2 durchgeführt. Zudem wurden der Versteifungsbeginn (V-Beginn) und das Versteifungsende (V-Ende) mit einem Vicat-Nadelgerät nach DIN 1168 gemessen.

**Tabelle 3: Ausbreitmass (ABM) in mm und Versteifungsbeginn/-ende in Stunden (h) und Minuten (min)**

| | Dosierung (Gew.-%) | V-Beginn (h:min) | V-Ende (h:min) | ABM 3 min | ABM 20 min |
|---|---|---|---|---|---|
| ***P-1*** | 0.15 | 0:39 | 0:45 | 370 | 342 |
| **P-2** | 0.15 | 0:31 | 0:35 | 338 | 303 |
| **P-3** | 0.15 | 0:33 | 0:38 | 344 | 308 |
| **N-1** | 0.15 | 1:10 | 1:21 | 302 | 317 |
| **N-2** | 0.15 | 0:41 | 0:48 | 322 | 314 |
| **N-3** | 0.15 | 25:35 | 27:10 | 400 | 401 |
| **N-4** | 0.15 | 1:31 | 1:42 | 402 | 397 |
| ***N*-*6*** | 1.00 | 0:36 | 0:42 | 342 | 304 |

Aus Tabelle 3 ist ersichtlich, dass die Verarbeitbarkeit der Gipszusammensetzungen, welche erfindungsgemäss die Polymere **P-1** bis **P-3** enthalten, sehr gut ist, ohne zu verzögern. Bei den herkömmlichen Verflüssigern wird entweder der Versteifungsbeginn oder das Versteifungsende stark verzögert (**N-1**, **N-3**, **N-4**), oder die Verarbeitbarkeit ist geringer (**N-1**, **N-2**). Die Gipszusammensetzung wird als gut verarbeitbar erachtet, wenn die Werte des Ausbreitmass nach 3 min über 330 mm betragen. Erwünscht ist insbesondere eine Abbindezeit, d.h. ein Versteifungsbeginn bzw. -ende von weniger als einer Stunde.
Zudem führt die Verwendung von Polymeren **N-1** zu unerwünschter Nachverflüssigung.
Tabelle 3 zeigt auch, dass die erfindungsgemäss verwendeten Polymere bei geringerer Dosierung vergleichbare Resultate erzielen wie herkömmliche melaminbasierende Gipsverflüssiger (**N-6**) ohne dass sie deren Nachteile, wie beispielsweise Formaldehydfreisetzung oder Verfärbung, aufweisen. D.h., um vergleichbare Resultate zu erzielen, muss der Verflüssiger **N-6** viel höher dosiert verwendet werden.

### 2.2 Fliessverhalten in ternären Systemen

Es wurde eine ternäre Zusammensetzung mit einem Wasser/Feststoffverhältnis von 0.24 hergestellt mit 28 Gew.-% Bindemittel, wovon 8 Gew.-% Calciumsulfat-α-Halbhydrat, 14 Gew.-% Tonerderzement, und 6 Gew.-% Portlandzement (CEM I) betragen, 68.5 Gew.-% Quarzsand mit einer Korngrösse von 0-0.4 mm, sowie 0.2 Gew.-% Verflüssiger (Tabelle 4). Die Gew.-% sind jeweils bezogen auf das Gesamtgewicht der Mörteltrockenmischung. Zusätzlich enthält die Mörteltrockenmischung Additive, wie Entschäumer, Verdicker, Dispersionspulver und Stabilisator.

Zur Untersuchung des Fliessverhaltens wurde das Ausbreitmass (ABM) in Millimeter nach 3 Minuten (min) beziehungsweise 20 Minuten gemessen. Die Untersuchungen wurden nach EN 196-1, EN 459-2, EN 13454-1 und 2 durchgeführt.

**Tabelle 4: Ausbreitmass (ABM) in mm**

| | Dosierung (Gew.-%) | ABM 3 min | ABM 20 min |
|---|---|---|---|
| **P-2** | 0.20 | 361 | 359 |
| **P-3** | 0.20 | 355 | 360 |
| **N-1** | 0.20 | 309 | 397 |
| **N-2** | 0.20 | 343 | 326 |
| **N-5** | 0.20 | 292 | 283 |
| **N-6** | 0.60 | 315 | |

Aus Tabelle 4 ist ersichtlich, dass die Verarbeitbarkeit der Gipszusammensetzungen, welche erfindungsgemäss die Polymere **P-2** und **P-3** enthalten, sehr gut ist. Bei den herkömmlichen Verflüssigern ist das Ausbreitmass und somit die Verarbeitbarkeit geringer (**N-1**, **N-2**, **N-5**, **N-6**). Zudem ist auch hier bei der Verwendung von Polymeren N-1 die unerwünschte Nachverflüssigung ersichtlich.
Tabelle 4 zeigt auch, dass der herkömmliche melaminbasierende Gipsverflüssiger (**N-6**) trotz dreifacher Dosierung nicht das Ausbreitmass der erfindungsgemäss verwendeten Polymere **P-2** und **P-3** erreicht.

### 2.3 Fliessverhalten im Calciumsulfat-α-Halbhydrat

Für einen Gipsslurry wurde zu 200 g Wasser der Verflüssiger in einer gemäss Tabelle 5 definierten Menge gegeben, dann 500 g Calciumsulfat-α-Halbhydrat eingestreut und 1 Minute bei 1000 rpm gerührt. Das Ausbreitmass wurde nach 2 Minuten mit dem Minikonus mit einem Durchmesser von 50mm und einer Höhe von 51mm bestimmt. Mit dem Vicat-Nadelgerät nach DIN 1168 wurde der Versteifungsbeginn (V-Beginn) nach EN 13279-2 bestimmt. Das Versteifungsende (V-Ende) ist erreicht, wenn die Eindringtiefe des Tauchkonus in den Gipskuchen < 1 mm ist.

**Tabelle 5: Ausbreitmass (ABM) in mm und Versteifungsbeginn/-ende in Stunden (h) und Minuten (min)**

| | Dosierung (Gew.-%) | V-Beginn (h:min) | V-Ende (h:min) | ABM 2 min |
|---|---|---|---|---|
| ***ohne*** | | 0:14 | 0:19 | 120 |
| ***P-1*** | 0.1 | 0:23 | 0:26 | 219 |
| **P-2** | 0.1 | 0:22 | 0:24 | 219 |
| **P-3** | 0.1 | | | 230 |
| **N-1** | 0.1 | 0:44 | 0:48 | 176 |
| **N-2** | 0.1 | 0:30 | 0:33 | 201 |
| **N-4** | 0.1 | 0:51 | 0:56 | 302 |
| ***N-5*** | 0.1 | 0:43 | 0:50 | 225 |
| ***N-6*** | 0.3 | 0:28 | 0:31 | 217 |

Tabelle 5 zeigt, dass im reinen Gipsslurry aus Calciumsulfat-α-Halbhydrat die Verarbeitbarkeit der Gipszusammensetzungen, welche erfindungsgemäss die Polymere **P-1**, **P-2** und **P-3** enthalten, sehr gut ist, ohne zu verzögern. Bei den herkömmlichen Verflüssigern ist entweder das Ausbreitmass und somit die Verarbeitbarkeit geringer (**N-1** und **N-2**), oder der Versteifungsbeginn oder das Versteifungsende ist stark verzögert **(N-1, N-2, N-4, N-5**)**.** Wird der Gipsslurry ohne Verflüssiger hergestellt, ist das Ausbreitmass deutlich schlechter.
Tabelle 5 zeigt auch, dass der herkömmliche melaminbasierende Gipsverflüssiger (**N-6**) trotz dreifacher Dosierung nicht die Resultate der erfindungsgemäss verwendeten Polymere **P-1**, **P-2** und **P-3** erreicht.

### 2.4 Fliessverhalten im Calciumsulfat-β-Halbhydrat

Für einen Gipsslurry wurden 204 g Wasser mit dem Verflüssiger in einer gemäss Tabelle 6 angegebenen Dosierung vorgelegt, dann 300 g Calciumsulfat-β-Halbhydrat innerhalb von 15 Sekunden eingestreut und der Gipsslurry 30 Sekunden sumpfen gelassen. Anschliessend wurde 1 Minute mit der Hand intensiv gerührt. Der Minikonus mit einem Durchmesser von 50mm und einer Höhe von 51 mm wurde gefüllt und nach 2 Minuten das Ausbreitmass (ABM) bestimmt. Mit dem Vicat-Nadelgerät nach DIN 1168 wurde der Versteifungsbeginn (V-Beginn) nach EN 13279-2 bestimmt. Das Versteifungsende (V-Ende) ist erreicht, wenn die Eindringtiefe des Tauchkonus in den Gipskuchen < 1 mm ist.

**Tabelle 6: Ausbreitmass (ABM) in mm und Versteifungsbeginn/-ende in Minuten (min) und Sekunden (sec)**

| | Dosierung (Gew.-%) | V-Beginn (min:sec) | V-Ende (min:sec) | ABM 2 min |
|---|---|---|---|---|
| ***ohne*** | | 5:30 | 7:40 | 215 |
| ***P-1*** | 0.3 | 6:10 | 8:35 | 252 |
| **P-2** | 0.3 | 6:35 | 9:05 | 254 |
| **P-3** | 0.3 | 6:25 | 8:55 | 250 |
| **N-1** | 0.3 | 9:50 | 15:10 | 252 |
| **N-3** | 0.3 | 14:30 | 22:00 | 275 |
| **N-4** | 0.3 | 7:35 | 10:30 | 258 |
| ***N-5*** | 0.3 | 8:15 | 11:20 | 252 |
| ***N-6*** | 0.3 | 5:00 | 6:35 | 236 |
| ***N-6*** | 0.9 | 5:40 | 7:55 | 258 |

Tabelle 6 zeigt, dass im reinen Gipsslurry aus Calciumsulfat-β-Halbhydrat die Verarbeitbarkeit der Gipszusammensetzungen, welche erfindungsgemäss die Polymere **P-1**, **P-2** und **P-3** enthalten, sehr gut ist und der Versteifungsbeginn bzw. das Versteifungsende deutlich früher erfolgt als bei den herkömmlichen Verflüssigern. Bei den herkömmlichen Verflüssigern ist insbesondere der Versteifungsbeginn und das Versteifungsende verzögert **(N-1, N-3, N-4, N-5**) gegenüber den erfindungsgemäss verwendeten Polymeren.
Die herkömmlichen melaminbasierenden Gipsverflüssiger (**N-6**) weisen erst bei dreifacher Dosierung das mit den erfindungsgemäss verwendeten Polymere **P-1**, **P-2** und **P-3** erreichte Ausbreitmass auf.
Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

## Patentansprüche

1. Verwendung mindestens eines Polymers **P** als Dispergiermittel für Gipszusammensetzungen, wobei das Polymer **P** umfasst:
a) m Mol-% mindestens einer Struktureinheit **A** der Formel (I); 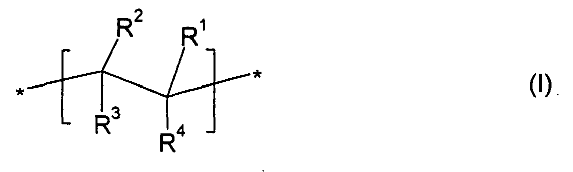
b) n Mol-% mindestens einer Struktureinheit B der Formel (II); 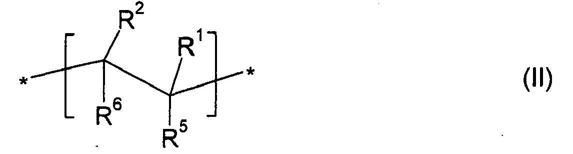
c) o Mol-% mindestens einer Struktureinheit C der Formel (III); 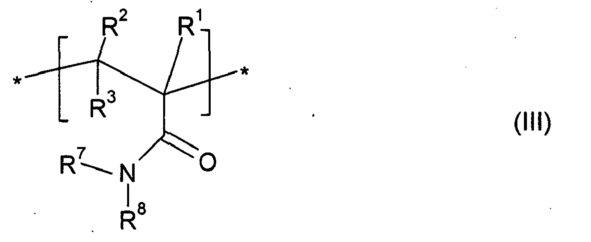 und gegebenenfalls
d) p Mol-% mindestens einer weiteren Struktureinheit D;
wobei R¹ unabhängig voneinander für H, CH₂COOM oder eine Alkylgruppe mit 1 bis 5 Kohlenstoffatomen steht,
wobei R² unabhängig voneinander für H, eine Alkylgruppe mit 1 bis 5 Kohlenstoffatomen, COOM oder CH₂COOM steht;
wobei R³ unabhängig voneinander für H, CH₃, COOM oder CH₂COOM steht; und
wobei R⁴ unabhängig voneinander für COOM steht;
oder wobei R³ mit R⁴ einen Ring bildet zu -CO-O-CO-;
wobei M für H, Alkalimetall, Erdalkalimetall, Ammonium, Ammoniumkation, oder Mischungen davon steht;
wobei R⁵ unabhängig voneinander für 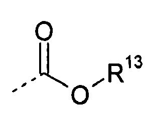 steht,
wobei R¹³ für-[(R⁹O)ₓ-(R¹⁰)_{y}(R¹¹O)_{z}]-R¹² steht;
wobei R⁹, R¹⁰ und R¹¹ je unabhängig voneinander eine C₂ - C₄ Alkylengruppe bedeutet mit einer Reihenfolge der (R⁹O)-, (R¹⁰O)-, und (R¹¹O)-Einheiten in irgendeiner möglichen Sequenz;
wobei R¹² für H, einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x, y, z unabhängig voneinander je die Werte 0 - 250 aufweisen und x+y+z = 3 - 250 ist;
wobei R⁶ unabhängig voneinander für H, CH₃, COOM, CH₂COOM oder einen Substituenten wie für R⁵ definiert steht;
wobei R⁷ und R⁸ zusammen einen Ring bilden, der gegebenenfalls Sauerstoff, Schwefel- oder weitere Stickstoffatome enthält;
oder wobei R⁷ und R⁸ unabhängig voneinander H, eine C₁ - C₂₀ Alkylgruppe, eine C₅ - C₉ Cycloalkyl-Gruppe, eine C₇ - C₁₂ Aralkyl-Gruppe, eine Hydroxyalkylgruppe, oder eine Verbindung der Formel (IV), (V) oder (VI) darstellen,
-R¹⁴-X(R¹⁵)r (IV) 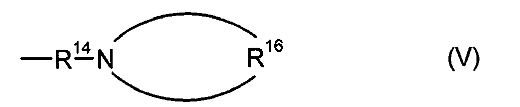
-[(R^{9'}O)_{x'}-(R^{10'}O)_{y'}-(R^{11'}O)_{z'}]- R^{12'} (VI)
wobei R¹⁴ unabhängig voneinander eine Alkylengruppe und R¹⁵ eine C₁- bis C₄-Alkylgruppe, und X unabhängig voneinander ein S, O oder N darstellt,
wobei r = 1, falls X= S oder O, oder r = 2, falls X = N;
wobei R¹⁶ eine Alkylengruppe mit gegebenenfalls Heteroatomen ist;
wobei R^{9'}, R^{10'} und R^{11'} je unabhängig voneinander eine C₂ - C₄ Alkylengruppe bedeutet mit einer Reihenfolge der (R^{9'}O)-, (R^{10'}O)-, und (R^{11'}O)-Einheiten in irgendeiner möglichen Sequenz;
wobei R^{12'} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x', y', z' unabhängig von einander je die Werte 0 - 100 aufweisen und x'+y'+z' = 1 - 100 ist;
wobei *m*, *n*, *o*, *p* unabhängig voneinander Zahlen bedeuten, wobei die Summe *m+n+o+p* = 100, und *m*>0, *n*>0, *o*>0 und *p*≥0 bedeuten; und
wobei das Verhältnis *m*/(*n*+*o*+*p*) zwischen 2 und 6 beträgt.

2. Verwendung eines Polymers **P** gemäss Anspruch **1**, wobei die Gipszusammensetzung mindestens 30 Gew.-% Gips enthält, bezogen auf das Gesamtgewicht des Bindemittels.

3. Verwendung eines Polymers **P** gemäss Anspruch 1 oder 2, wobei Gips Calciumsulfat-Dihydrat, Calciumsulfat-Halbhydrat oder Calciumsulfat-Anhydrit bedeutet.

4. Verwendung eines Polymers **P** gemäss einem der vorhergehenden Ansprüche, wobei das Polymer **P** erhältlich ist durch oder hergestellt wird mittels polymeranaloger Reaktion der Veresterung und Amidierung einer Polycarbonsäure.

5. Verwendung eines Polymers **P** gemäss Anspruch 4, wobei das Polymer **P** erhältlich ist durch die Reaktion von
a) mindestens einer Polycarbonsäure oder Analogon einer Polycarbonsäure; und
b) mindestens einer Monohydroxyverbindung **E** der Formel (VII)
HO-[(R⁹O)ₓ-(R¹⁰O)_{y}-(R¹¹O)_{z}]-R^{12"} (VII)
wobei R⁹, R¹⁰ und R¹¹ je unabhängig voneinander eine C₂ - C₄ Alkylengruppe bedeutet mit einer Reihenfolge der (R⁹O)-, (R¹⁰O)-, und (R¹¹O)-Einheiten in irgendeiner möglichen Sequenz;
wobei R^{12"} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x, y, z unabhängig voneinander je die Werte 0 - 250 aufweisen und x+y+z = 3 - 250 ist;
c) mindestens einer Monoaminverbindung **F** der Formel (VIII)
R^{7'}-NH-R^{8'} (VIII)
und/oder mindestens einer Aminverbindung **F**' der Formel (VIII')
R^{7"}-NH-R^{8"} (VIII')
wobei R^{7'} und R^{8'} zusammen einen Ring bilden, der gegebenenfalls Sauerstoff-, Schwefel- oder weitere Stickstoffatome enthält;
oder wobei R^{7'} und R^{8'} unabhängig voneinander H, eine C₈ - C₂₀ Alkylgruppe, eine C₅ - C₉ Cycloalkyl-Gruppe, eine C₇ - C₁₂ Aralkyl-Gruppe, oder eine Verbindung der Formel (IV), (V) oder (VI) darstellen,
wobei R^{7"} und R^{8"} zusammen einen Ring bilden, der gegebenenfalls Sauerstoff-, Schwefel- oder weitere Stickstoffatome enthält;
oder wobei R^{7"} und R^{8"} unabhängig voneinander H, eine C₁ - C₁₂ Alkylgruppe, eine C₅ - C₉ Cycloalkyl-Gruppe, eine C₇ - C₁₂ Aralkyl-Gruppe, eine Hydroxyalkylgruppe, oder eine Verbindung der Formel (IV), (V) oder (VI) darstellen,
-R¹⁴-X(R¹⁵)ᵣ (IV) 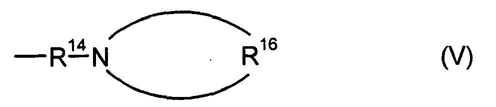
-[(R^{9'}O)_{x'}-(R^{10'}O)_{y'}-(R^{11'}O)_{z'}]- R^{12'} (VI)
wobei R¹⁴ unabhängig voneinander eine Alkylengruppe und R¹⁵ eine C₁- bis C₄-Alkylgruppe, und X unabhängig voneinander ein S, O oder N darstellt, wobei r = 1, falls X= S oder O, und r = 2, falls X = N;
wobei R¹⁶ eine Alkylengruppe mit gegebenenfalls Heteroatomen ist;
wobei R^{9'}, R^{10'} und R^{11'} je unabhängig voneinander eine C₂ - C₄ Alkylengruppe bedeutet mit einer Reihenfolge der (R^{9'}O)-, (R^{10'}O)-, und (R^{11'}O)-Einheiten in irgendeiner möglichen Sequenz;
wobei R^{12'} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x', y', z' unabhängig voneinander je die Werte 0 - 100 aufweisen und x'+y'+z' = 1 - 100 ist; und
gegebenenfalls
d) mindestens einer weiteren Verbindung **G**.

6. Verwendung eines Polymers **P** gemäss Anspruch 5, **dadurch gekennzeichnet, dass** die mindestens eine Polycarbonsäure oder das Analogon einer Polycarbonsäure mit mindestens einer Monohydroxyverbindung **E** der Formel (VII) und gegebenenfalls mindestens einer Monoaminverbindung **F** der Formel (VIII) und gegebenenfalls mindestens einer weiteren Verbindung **G** bei einer Temperatur bis 200°C umgesetzt wird, so dass Anhydridgruppen entstehen, und dass in einem zweiten Schritt die im ersten Schritt gebildeten Anhydridgruppen vollständig oder teilweise mit einer Aminverbindung **F'** der Formel (VIII') bei Temperaturen deutlich unter 100°C zum Amid umgesetzt werden.

7. Verwendung eines Polymers **P** gemäss einem der Ansprüche 5 bis 6, wobei das Analogon der Polycarbonsäure des Polymers **P** ausgewählt ist aus der Gruppe Säuresalze, Säurehalogenide, Säureanhydride und Säureester.

8. Verwendung eines Polymers **P** gemäss einem der Ansprüche 1 bis 3, wobei das Polymer **P** erhältlich ist durch oder hergestellt wird mittels einer radikalischen Polymerisationsreaktion.

9. Verwendung eines Polymers **P** gemäss Anspruch 8, wobei das Polymer **P** erhältlich ist durch die Polymerisationsreaktion in Gegenwart von mindestens einem Radikalbildner von
a) mindestens einer ethylenisch ungesättigten Mono- oder Dicarbonsäure M oder einem Analogon von einer ungesättigten Mono- oder Dicarbonsäure; mit
b) mindestens einem ethylenisch ungesättigten Carbonsäurederivat H der Formel (IX); 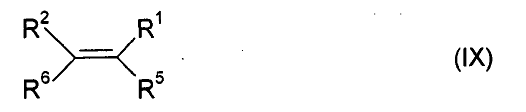
c) mindestens einem zweiten ethylenisch ungesättigten
Carbonsäurederivat K der Formel (X); 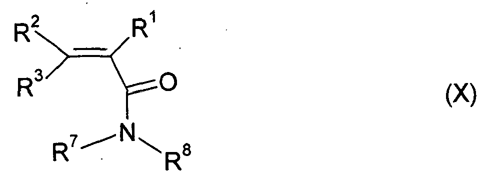 und gegebenenfalls
d) mindestens einer weiteren ethylenisch ungesättigten Verbindung L,
wobei R¹ unabhängig voneinander für H, CH₂COOM oder eine Alkylgruppe mit 1 bis 5 Kohlenstoffatomen steht,
wobei R² unabhängig voneinander für H, eine Alkylgruppe mit 1 bis 5 Kohlenstoffatomen, COOM oder CH₂COOM steht;
wobei R³ unabhängig voneinander für H, CH₃, COOM oder CH₂COOM steht; und
wobei M für H, Alkalimetall, Erdalkalimetall, Ammonium, Ammoniumkation, oder Mischungen davon steht;
wobei R⁵ unabhängig voneinander für 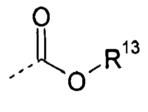 steht,
wobei R¹³ für -[(R⁹O)ₓ-(R¹⁰O)_{y}-(R¹¹O)_{z}]-R¹² steht;
wobei R⁹, R¹⁰ und R¹¹ je unabhängig voneinander eine C₂ - C₄ Alkylengruppe bedeutet mit einer Reihenfolge der (R⁹O)- (R¹⁰O)-, und (R¹¹O)-Einheiten in irgendeiner möglichen Sequenz;
wobei R¹² für H, einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x, y, z unabhängig voneinander je die Werte 0 - 250 aufweisen und x+y+z = 3 - 250 ist;
wobei R⁶ unabhängig voneinander für H, CH₃, COOM, CH₂COOM oder einen Substituenten wie für R⁵ definiert steht;
wobei R⁷ und R⁸ zusammen einen Ring bilden, der gegebenenfalls Sauerstoff, Schwefel- oder weitere Stickstoffatome enthält;
oder wobei R⁷ und R⁸ unabhängig voneinander H, eine C₁ - C₂₀ Alkylgruppe, eine C₅ - C₉ Cycloalkyl-Gruppe, eine C₇ - C₁₂ Aralkyl-Gruppe, eine Hydroxyalkylgruppe, oder eine Verbindung der Formel (IV), (V) oder (VI) darstellen,
-R¹⁴-X(R¹⁵)ᵣ (IV) 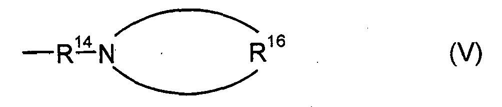
-[(R^{9'}O)ₓ-(R^{10'}O)_{y'}-(R^{11'}O)_{z'}]- R^{12'} (VI)
wobei R¹⁴ unabhängig voneinander eine Alkylengruppe und R¹⁵ eine C₁- bis C₄-Alkylgruppe, und X unabhängig voneinander ein S, O oder N darstellt, wobei r = 1, falls X= S oder O, oder r = 2, falls X = N;
wobei R¹⁶ eine Alkylengruppe mit gegebenenfalls Heteroatomen ist;
wobei R^{9'}, R^{10'} und R^{11'} je unabhängig voneinander eine C₂ - C₄ Alkylengruppe bedeutet mit einer Reihenfolge der (R^{9'}O)-, (R^{10'}O)-, und (R^{11'}O)-Einheiten in irgendeiner möglichen Sequenz;
wobei R^{12'} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x', y', z' unabhängig voneinander je die Werte 0 - 100 aufweisen und x'+y'+z' = 1 - 100 ist.

10. Verwendung eines Polymers **P** gemäss einem der vorhergehenden Ansprüche, wobei im Polymer **P** R¹ H oder CH₃ ist und R², R³ und M für H stehen.

11. Verwendung gemäss einem der vorhergehenden Ansprüche, **dadurch gekennzeichnet, dass** R⁶ für H steht.

12. Verwendung gemäss einem der vorhergehenden Ansprüche, **dadurch gekennzeichnet, dass** R⁹ unabhängig voneinander für eine C₂-Alkylengruppe, R¹⁰ unabhängig voneinander für eine C₃-Alkylengruppe und R¹¹ unabhängig voneinander für eine C₄-Alkylengruppe steht, und wobei die Reihenfolge von (R⁹O), (R¹⁰O) und (R¹¹O) zufällig, alternierend oder blockweise ist.

13. Verwendung gemäss Anspruch 12, **dadurch gekennzeichnet, dass** R¹³ mindestens 30 Mol-% (R⁹O)-Einheiten, vorzugsweise 50 bis 100 Mol-% (R⁹O)-Einheiten, noch mehr bevorzugt 80 bis 100 Mol-% (R⁹O)-Einheiten umfasst, bezogen auf die Gesamtmolmenge aller (R⁹O)-, (R¹⁰O)- und (R¹¹O)-Einheiten.

14. Verwendung gemäss Anspruch 13, **dadurch gekennzeichnet, dass** R¹³ 100 Mol-% (R⁹O)-Einheiten umfasst, bezogen auf die Gesamtmolmenge aller (R⁹O)-, (R¹⁰O)- und (R¹¹O)-Einheiten.

15. Verwendung gemäss einem der vorhergehenden Ansprüche, wobei das Polymer **P** 50 bis 95 Mol-%, vorzugsweise 66 bis 86 Mol-% der Struktureinheit **A** der Formel (I), 5 bis 50 Mol-%, vorzugsweise 14 bis 34 Mol-% der Struktureinheit **B** der Formel (II), 0.001 bis 30 Mol-%, vorzugsweise 0.01 bis 1 Mol-% der Struktureinheit **C** der Formel (III), und gegebenenfalls 0 bis 30 Mol%, vorzugsweise 0 bis 1 Mol-% der Struktureinheit **D** umfasst, jeweils bezogen auf die Gesamtmolmenge der Struktureinheiten von **A, B, C** und **D** im Polymer **P.**

16. Verwendung gemäss einem der vorhergehenden Ansprüche, **dadurch gekennzeichnet, dass** das Polymer **P** ein Molekulargewicht im Bereich von 1'000 - 150'000 g/mol, vorzugsweise 10'000 - 100'000 g/mol, besonders bevorzugt 30'000-80'000 g/mol, aufweist.

17. Verwendung eines Polymers **P** gemäss einem der vorhergehenden Ansprüche, **dadurch gekennzeichnet, dass** das Polymer **P** in flüssiger oder fester Form verwendet wird.

18. Bindemittel enthaltendes Gemisch umfassend mindestens 30 Gew.-% Gips, bezogen auf das Gesamtgewicht des Bindemittels, und mindestens ein Polymer **P,** wobei das Polymer **P** umfasst:
a) m Mol-% mindestens einer Struktureinheit **A** der Formel (I); 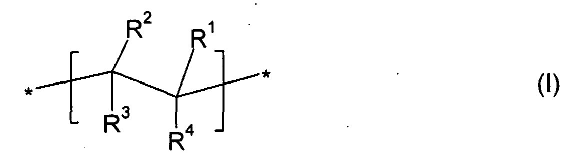
b) n Mol-% mindestens einer Struktureinheit **B** der Formel (II); 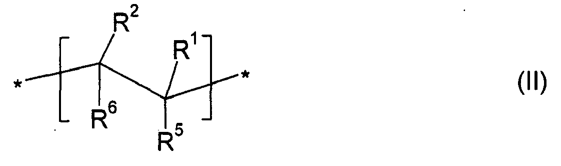
c) *o* Mol-% mindestens einer Struktureinheit C der Formel (III); 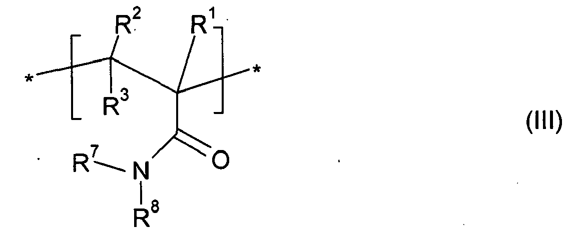 und gegebenenfalls
d) *p* Mol-% mindestens einer weiteren Struktureinheit **D;**
wobei R¹ unabhängig voneinander für H, CH₂COOM oder eine Alkylgruppe mit 1 bis 5 Kohlenstoffatomen steht,
wobei R² unabhängig voneinander für H, eine Alkylgruppe mit 1 bis 5 Kohlenstoffatomen, COOM oder CH₂COOM steht;
wobei R³ unabhängig voneinander für H, CH₃, COOM oder CH₂COOM steht; und
wobei R⁴ unabhängig voneinander für COOM steht;
oder wobei R³ mit R⁴ einen Ring bildet zu -CO-O-CO-;
wobei M für H, Alkalimetall, Erdalkalimetall, Ammonium, Ammoniumkation, oder Mischungen davon steht;
wobei R⁵ unabhängig voneinander für 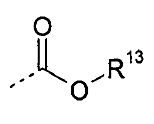 steht,
wobei R¹³ für -[(R⁹O)ₓ-(R¹⁰O)_{y}-(R¹¹O)_{z}]-R¹² steht;
wobei R⁹, R¹⁰ und R¹¹ je unabhängig voneinander eine C₂ - C₄ Alkylengruppe bedeutet mit einer Reihenfolge der (R⁹O)-, (R¹⁰O)-, und (R¹¹O)-Einheiten in irgendeiner möglichen Sequenz;
wobei R¹² für H, einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x, y, z unabhängig voneinander je die Werte 0 - 250 aufweisen und x+y+z = 3 - 250 ist;
wobei R⁶ unabhängig voneinander für H, CH₃, COOM, CH₂COOM oder einen Substituenten wie für R⁵ definiert steht;
wobei R⁷ und R⁸ zusammen einen Ring bilden, der gegebenenfalls Sauerstoff, Schwefel- oder weitere Stickstoffatome enthält;
oder wobei R⁷ und R⁸ unabhängig voneinander H, eine C₁ - C₂₀ Alkylgruppe, eine C₅ - C₉ Cycloalkyl-Gruppe, eine C₇ - C₁₂ Aralkyl-Gruppe, eine Hydroxyalkylgruppe, oder eine Verbindung der Formel (IV), (V) oder (VI) darstellen,
-R¹⁴-X(R¹⁵)ᵣ (IV) 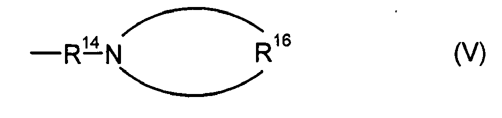
-[(R^{9'}O)_{x'}-(R^{10'}O)_{y'}-(R^{11'}O)_{z'}]- R^{12'} (VI)
wobei R¹⁴ unabhängig voneinander eine Alkylengruppe und R¹⁵ eine C₁- bis C₄-Alkylgruppe, und X unabhängig voneinander ein S, O oder N darstellt, wobei r = 1, falls X= S oder O, oder r = 2, falls X = N;
wobei R¹⁶ eine Alkylengruppe mit gegebenenfalls Heteroatomen ist;
wobei R^{9'}, R^{10'} und R^{11'} je unabhängig voneinander eine C₂ - C₄Alkylengruppe bedeutet mit einer Reihenfolge der (R^{9'}O)-, (R^{10'}O)-, und (R^{11'}O)-Einheiten in irgendeiner möglichen Sequenz;
wobei R^{12'} für einen C₁ - C₁₂ Alkyl- oder Cycloalkylrest, einen C₇ - C₂₀ Alkylaryl- oder Aralkylrest, oder einen substituierten oder unsubstituierten Arylrest steht;
wobei x', y', z' unabhängig voneinander je die Werte 0 - 100 aufweise und x'+y'+z' = 1 - 100 ist;
wobei *m*, *n, o*, *p* unabhängig voneinander Zahlen bedeuten, wobei *m+n+o+p* = 100, und *m*>0, *n*>0, o>0 und p≥0 bedeuten; und
wobei das Verhältnis *m*/*(n+o+p)* zwischen 2 und 6 beträgt.

19. Bindemittel enthaltendes Gemisch gemäss Anspruch 18, **dadurch gekennzeichnet, dass** Gips Calciumsulfat-Dihydrat, Calciumsulfat-Halbhydrat oder Calciumsulfat-Anhydrit bedeutet.

20. Bindemittel enthaltendes Gemisch gemäss einem der Ansprüche 18 bis 19, **dadurch gekennzeichnet, dass** das Polymer **P** erhältlich ist durch oder hergestellt wird mittels Polymer analoger Reaktion der Veresterung und Amidierung einer Polycarbonsäure.

21. Bindemittel enthaltendes Gemisch gemäss einem der Ansprüche 18 bis 19, **dadurch gekennzeichnet, dass** das Polymer **P** erhältlich ist durch oder hergestellt wird mittels einer radikalischen Polymerisationsreaktion.

22. Verfahren zur Herstellung eines Bindemittel enthaltenden Gemisches gemäss einem der Ansprüche 18 bis 21, **dadurch gekennzeichnet, dass** das Polymer **P** getrennt oder als Zusatzmittel vorgemischt in fester oder flüssiger Form dem Bindemittel zugegeben wird.

## Claims

1. The use of at least one polymer **P** as a dispersant for gypsum compositions, the polymer **P** comprising:
a) m mol% of at least one structural unit **A** of the formula (I); 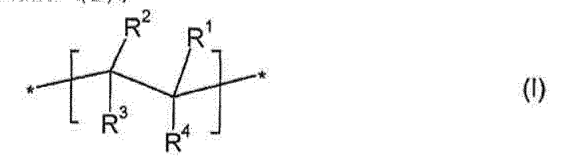
b) n mol% of at least structural unit B of the formula (II); 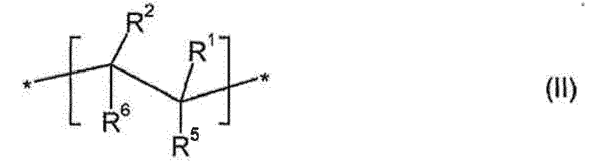
c) o mol% of at least one structural unit C of the formula (III); 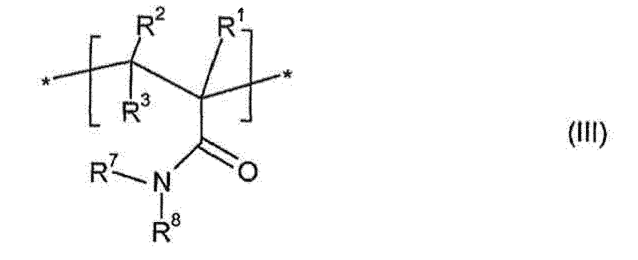 and optionally
d) p mol% of at least one further structural unit D;
in which R¹, independently of one another, is H, CH₂COOM or an alkyl group having 1 to 5 carbon atoms,
in which R², independently of one another, is H, an alkyl group having 1 to 5 carbon atoms, COOM or CH₂COOM;
in which R³, independently of one another, is H, CH₃, COOM or CH₂COOM; and
in which R⁴, independently of one another, is COOM; or in which R³ and R⁴ form a ring to give -CO-O-CO-;
in which M is H, alkali metal, alkaline earth metal, ammonium, ammonium cation or mixtures thereof;
in which R⁵, independently of one another, is 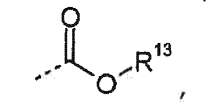 in which R¹³ is -[(R⁹O)ₓ-(R¹⁰O)_{y}-(R¹¹-O)_{z}]-R¹²;
in which R⁹, R¹⁰ and R¹¹, each independently of one another, is a C₂-C₄-alkylene group having an order of the (R⁹O), (R¹⁰O) and (R¹¹O) units in any possible sequence;
in which R¹² is H, a C₁-C₁₂-alkyl or cycloalkyl radical, a C₇-C₂₀-alkylaryl or aralkyl radical, or a substituted or unsubstituted aryl radical;
in which x, y and z, independently of one another, each have the values 0-250 and x+y+z = 3-250;
in which R⁶, independently of one another, is H, CH₃, COOM, CH₂COOM or a substituent as defined for R⁵;
in which R⁷ and R⁸, together form a ring which optionally contains oxygen, sulfur or further nitrogen atoms;
or in which R⁷ and R⁸, independently of one another, are H, a C₁-C₂₀-alkyl group, a C₅-C₉-cycloalkyl group, a C₇-C₁₂-aralkyl group, a hydroxyalkyl group, or a compound of the formula (IV), (V) or (VI),
-R¹⁴-X(R¹⁵)ᵣ (IV) 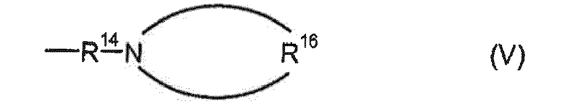
-[(R^{9'}O)ₓ-(R^{10'}O)_{y'}-(R^{11'}O)_{z'}]- R^{12'} (VI)
in which R¹⁴, independently of one another, is an alkylene group and R¹⁵ is a C₁- to C₄-alkyl group and X, independently of one another, is an S, O or N, where r = 1 if X = S or O, or r = 2 if X = N; in which R¹⁶ is an alkylene group having optionally heteroatoms;
in which R^{9'}, R^{10'} and R^{11'}, each independently of one another, is a C₂-C₄-alkylene group having an order of the (R^{9'}O), (R^{10'}O) and (R^{11'}O) units in any possible sequence;
in which R^{12'} is a C₁-C₁₂-alkyl or cycloalkyl radical, a C₇-C₂₀-alkylaryl or aralkyl radical, or a substituted or unsubstituted aryl radical;
in which x', y' and z', independently of one another, each have the values 0-100 and x'+y'+z' = 1-100;
in which m, n, o and p, independently of one another, are numbers, where the sum m+n+o+p = 100 and *m*>0, *n*>0, *o*>0 and p>0; and in which the ratio *m*/ (*n*+*o*+*p*) is from 2 to 6.

2. The use of a polymer **P** as claimed in claim 1, the gypsum composition containing at least 30% by weight of gypsum, based on the total weight of the binder.

3. The use of a polymer **P** as claimed in claim 1 or 2, gypsum being calcium sulfate dihydrate, calcium sulfate hemihydrate or calcium sulfate anhydrite.

4. The use of a polymer **P** as claimed in any of the preceding claims, the polymer **P** being obtainable by or being prepared by means of polymer-analogous reaction of the esterification and amidation of a polycarboxylic acid.

5. The use of a polymer **P** as claimed in claim 4, the polymer **P** being obtainable by the reaction of
a) at least one polycarboxylic acid or an analog of a polycarboxylic acid; and
b) at least one monohydroxy compound **E** of the formula (VII)
HO-[(R⁹O)ₓ-(R¹⁰O)_{y}-(R¹¹O)_{z}]-R^{12"} (VII)
in which R⁹, R¹⁰ and R¹¹, each independently of one another, is a C₂-C₄-alkylene group, having an order of the (R⁹O), (R¹⁰O) and (R¹¹O) units in any possible sequence;
in which R^{12"} is a C₁-C₁₂-alkyl or cycloalkyl radical, a C₇-C₂₀-alkylaryl or aralkyl radical, or a substituted or unsubstituted aryl radical;
in which x, y and z, independently of one another, each have the values 0-250 and x+y+z = 3-250;
c) at least one monoamine compound **F** of the formula (VIII)
R^{7'}-NH-R^{8'} (VIII)
and/or at least one amine compound **F'** of the formula (VIII')
R^{7"}-NH-R^{8"} (VIII')
in which R^{7'} and R^{8'} together form a ring which optionally contains oxygen, sulfur or further nitrogen atoms;
or in which R^{7'} and R^{8'}, independently of one another, are H, a C₈-C₂₀-alkyl group, a C₅-C₉-cycloalkyl group, a C₇-C₁₂-aralkyl group, or a compound of the formula (IV), (V) or (VI),
in which R^{7"} and R^{8"} together form a ring which optionally contains oxygen, sulfur or further nitrogen atoms;
or in which R^{7"} and R^{8"}, independently of one another, are H, a C₁-C₁₂-alkyl group, a C₅-C₉-cycloalkyl group, a C₇-C₁₂-aralkyl group, a hydroxyalkyl group, or a compound of the formula (IV), (V) or (VI),
-R¹⁴-X(R¹⁵)ᵣ (IV) 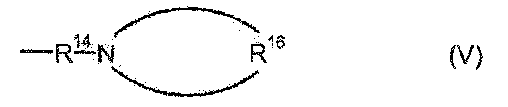
-[(R^{9'}O)_{x'}-(R^{10'}O)_{y'}-(R^{11'}O)_{z'}]- R^{12'} (VI)
in which R¹⁴, independently of one another, is an alkylene group and R¹⁵ is a C₁- to C₄-alkyl group and X, independently of one another, is an S, O or N, where r = 1 if X = S or O, and r = 2 if X = N; in which R¹⁶ is an alkylene group having optionally heteroatoms;
in which R^{9'}, R^{10'} and R^{11'}, each independently of one another, are a C₂-C₄-alkylene group having an order of the (R^{9'}O), (R^{10'}O) and (R^{11'}O) units in any possible sequence;
in which R^{12'} is a C₁-C₁₂-alkyl or cycloalkyl radical, a C₇-C₂₀-alkylaryl or aralkyl radical, or a substituted or unsubstituted aryl radical;
in which x', y' and z', independently of one another, each have the values 0-100 and x'+y'+z' = 1-100; and
optionally
d) at least one further compound **G**.

6. The use of a polymer **P** as claimed in claim 5, **characterized in that** the at least one polycarboxylic acid or the analog of a polycarboxylic acid is reacted with at least one monohydroxy compound **E** of the formula (VII) and optionally at least one monoamine compound **F** of the formula (VIII) and optionally at least one further compound **G** at1 a temperature up to 200°C so that anhydride groups form, and **in that**, in a second step, the anhydride groups formed in the first step are completely or partially converted into the amide with an amino compound **F'** of the formula (VIII') at temperatures substantially below 100°C.

7. The use of a polymer **P** as claimed in either of claims 5 and 6, the analog of the polycarboxylic acid of the polymer **P** being selected from the group consisting of acid salts, acid halides, acid anhydrides and acid esters.

8. The use of a polymer **P** as claimed in any of claims 1 to 3, the polymer **P** being obtainable by or prepared by means of a free radical polymerization reaction.

9. The use of a polymer **P** as claimed in claim 8, the polymer **P** being obtainable by the polymerization reaction, in the presence of at least one free radical former, of
a) at least one ethylenically unsaturated mono- or dicarboxylic acid **M** or an analog of an unsaturated mono- or dicarboxylic acid; with
b) at least one ethylenically unsaturated carboxylic acid derivative **H** of the formula (IX); 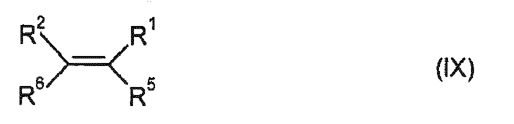
c) at least one second ethylenically unsaturated carboxylic acid derivative **K** of the formula (X) 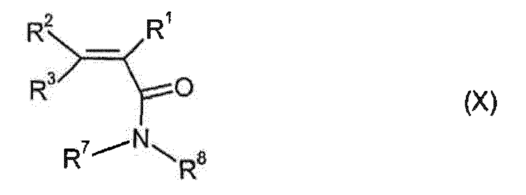 and optionally
d) at least one further ethylenically unsaturated compound **L**,
in which R¹, independently of one another, is H, CH₂COOM or an alkyl group having 1 to 5 carbon atoms,
in which R², independently of one another, is H, an alkyl group having 1 to 5 carbon atoms, COOM or
CH₂COOM;
in which R³, independently of one another, is H, CH₃, COOM or CH₂COOM; and
in which M is H, alkali metal, alkaline earth metal, ammonium, ammonium cation or mixtures thereof;
in which R⁵, independently of one another, is 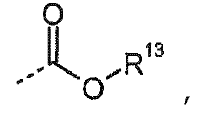 in which R¹³ is - [(R⁹O)ₓ-(R¹⁰O)_{y}-(R¹¹-O)_{z}]-R¹²;
in which R⁹, R¹⁰ and R¹¹, each independently of one another, is a C₂-C₄-alkylene group having an order of the (R⁹O), (R¹⁰O) and (R¹¹O) units in any possible sequence;
in which R¹² is H, a C₁-C₁₂-alkyl or cycloalkyl radical, a C₇-C₂₀-alkylaryl or aralkyl radical, or a substituted or unsubstituted aryl radical;
in which x, y and z, independently of one another, each have the values 0-250 and x+y+z = 3-250;
in which R⁶, independently of one another, is H, CH₃, COOM, CH₂COOM or a substituent as defined for R⁵;
in which R⁷ and R⁸, together form a ring which optionally contains oxygen, sulfur or further nitrogen atoms;
or in which R⁷ and R⁸, independently of one another, are H, a C₁-C₂₀-alkyl group, a C₅-C₉-cycloalkyl group, a C₇-C₁₂-aralkyl group, a hydroxyalkyl group, or a compound of the formula (IV), (V) or (VI),
-R¹⁴-X(R¹⁵)ᵣ (IV) 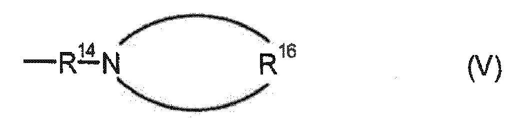
-[(R⁹O)_{x'}-(R¹⁰O)_{y}-(R^{11'}O)_{z'}]- R¹² (VI)
in which R¹⁴, independently of one another, is an alkylene group and R¹⁵ is a C₁- to C₄-alkyl group and X, independently of one another, is an S, O or N, where r = 1 if X = S or O, or r = 2 if X = N; in which R¹⁶ is an alkylene group having optionally heteroatoms;
in which R^{9'}, R^{10'} and R^{11'}, each independently of one another, is a C₂-C₄-alkylene group having an order of the (R^{9'}O), (R¹⁰O) and (R^{11'}O) units in any possible sequence;
in which R^{12'} is a C₁-C₁₂-alkyl or cycloalkyl radical, a C₇-C₂₀-alkylaryl or aralkyl radical, or a substituted or unsubstituted aryl radical;
in which x', y' and z', independently of one another, each have the values 0-100 and x'+y'+z' = 1-100.

10. The use of a polymer **P** as claimed in any of the preceding claims, in which, in the polymer **P**, R¹ is H or CH₃ and R², R³ and M are H.

11. The use as claimed in any of the preceding claims, **characterized in that** R⁶ is H.

12. The use as claimed in any of the preceding claims, **characterized in that** R⁹, independently of one another, is a C₂-alkylene group, R¹⁰, independently of one another, is a C₃-alkylene group and R¹¹, independently of one another, is a C₄-alkylene group, the order of (R⁹O), (R¹⁰O) and (R¹¹O) being random, alternating or blockwise.

13. The use as claimed in claim 12, **characterized in that** R¹³ comprises at least 30 mol% of (R⁹O) units, preferably from 50 to 100 mol% of (R⁹O) units, more preferably from 80 to 100 mol% of (R⁹O) units, based on the total solar amount of all (R⁹O), (R¹⁰O) and (R¹¹O) units.

14. The use as claimed in claim 13, **characterized in that** R¹³ comprises 100 mol% of (R⁹O) units, based on the total molar amount of all (R⁹O), (R¹⁰O) and (R¹¹O) units.

15. The use as claimed in any of the preceding claims, the polymer **P** comprising from 50 to 95 mol%, preferably from 66 to 86 mol%, of the structural unit **A** of the formula (I), from 5 to 50 mol%, preferably from 14 to 34 mol%, of the structural unit **B** of the formula (II), from 0.001 to 30 mol%, preferably from 0.01 to 1 mol%, of the structural unit **C** of the formula (III), and optionally from 0 to 30 mol%, preferably from 0 to 1 mol%, of the structural unit **D**, based in each case on the total molar amount of the structural units of **A, B, C** and **D** in the polymer **P**.

16. The use as claimed in any of the preceding claims, **characterized in that** the polymer **P** has a molecular weight in the range of 1000-150 000 g/mol, preferably 10 000-100 000 g/mol, particularly preferably 30 000-80 000 g/mol.

17. The use of a polymer **P** as claimed in any of the preceding claims, **characterized in that** the polymer **P** is used in a liquid or solid form.

18. A binder-containing mixture comprising at least 30% by weight of gypsum, based on the total weight of the binder, and at least one polymer **P**, the polymer **P** comprising:
a) m mol% of at least one structural unit **A** of the formula (I); 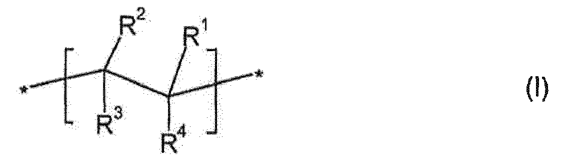
b) n mol% of at least one structural unit **B** of the formula (II); 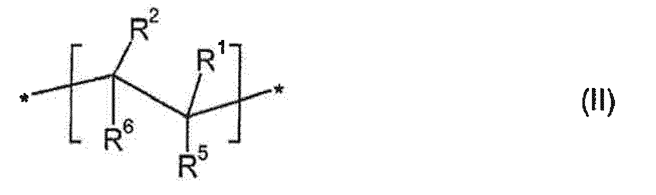
c) *o* mol% of at least one structural unit **C** of the formula (III); 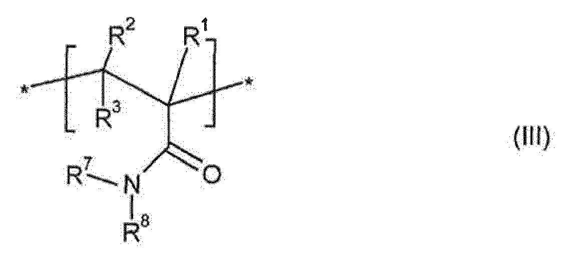 and optionally
d) *p* mol% of at least one further structural unit **D**;
in which R¹, independently of one another, is H, CH₂COOM or an alkyl group having 1 to 5 carbon atoms,
in which R², independently of one another, is H, an alkyl group having 1 to 5 carbon atoms, COOM or
CH₂COOM;
in which R³, independently of one another, is H, CH₃, COOM or CH₂COOM; and
in which R⁴, independently of one another, is COOM; or in which R³ and R⁴ form a ring to give -CO-O-CO-;
in which M is H, alkali metal, alkaline earth metal, ammonium, ammonium cation or mixtures thereof;
in which R⁵, independently of one another, is 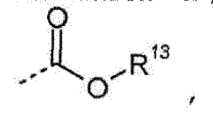 in which R¹³ is -[(R⁹O)ₓ-(R¹⁰O)_{y}-(R¹¹-O)_{z}]-R¹²;
in which R⁹, R¹⁰ and R¹¹, each independently of one another, is a C₂-C₄-alkylene group having an order or the (R⁹O), (R¹⁰O) and (R¹¹O) units in any possible sequence;
in which R¹² is H, a C₁-C₁₂-alkyl or cycloalkyl radical, a C₇-C₂₀-alkylaryl or aralkyl radical, or a substituted or unsubstituted aryl radical;
in which x, y and z, independently of one another, each have the values 0-250 and x+y+z = 3-250;
in which R⁶, independently of one another, is H, CH₃, COOM, CH₂COOM or a substituent as defined for R⁵;
in which R⁷ and R⁸, together form a ring which optionally contains oxygen, sulfur or further nitrogen atoms;
or in which R⁷ and R⁸, independently of one another, are H, a C₁-C₂₀-alkyl group, a C₅-C₉-cycloalkyl group, a C₇-C₁₂-aralkyl group, a hydroxyalkyl group, or a compound of the formula (IV), (V) or (VI)
-R¹⁴-X(R¹⁵)ᵣ (IV) 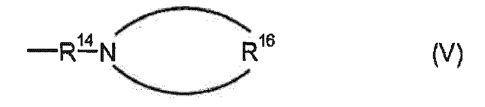
-[(R⁹'O)_{x'}-(R¹⁰O)_{y'}-(R¹¹O)_{z'}]- R^{12'} (VI)
in which R¹⁴, independently of one another, is an alkylene group and R¹⁵ is a C₁- to C₄-alkyl group and X, independently of one another, is an S, O or N, where r = 1 if X = S or O, or r = 2 if X = N;
in which R¹⁶ is an alkylene group having optionally heteroatoms;
in which R^{9'}, R^{10'} and R^{11'}, each independently of one another, are a C₂-C₄-alkylene group having an order of the (R^{9'}O), (R^{10'}O) and (R^{11'}O) units in any possible sequence;
in which R^{12'} is a C₁-C₁₂-alkyl or cycloalkyl radical, a C₇-C₂₀-alkylaryl or aralkyl radical, or a substituted or unsubstituted aryl radical;
in which x', y' and z', independently of one another, each have the values 0-100 and x'+y'+z' = 1-100;
in which *m*, *n*, *o* and *p*, independently of one another, are numbers, where *m+n+o+p* = 100 and *m*>0, *n*>0, *o*>0 and *p*≥0; and in which the ratio *m*/(*n*+*o*+*p*) is from 2 to 6.

19. The binder-containing mixture as claimed in claim 18, **characterized in that** gypsum is calcium sulfate dihydrate, calcium sulfate hemihydrate or calcium sulfate anhydrite.

20. The binder-containing mixture as claimed in any of claims 18 to 19, **characterized in that** the polymer **P** is obtainable by or is prepared by means of polymer-analogous reaction of the esterification and amidation of a polycarboxylic acid.

21. The binder-containing mixture as claimed in any of claims 18 to 19, **characterized in that** the polymer **P** is obtainable by or is prepared by means of a free radical polymerization reaction.

22. A process for the preparation of a binder-containing mixture as claimed in any of claims 18 to 21, **characterized in that** the polymer **P** is added separately or premixed as an admixture in solid or liquid form to the binder.

## Revendications

1. Utilisation d'au moins un polymère P comme agent dispersant pour compositions de gypse où le polymère P comprend :
a) m mol-% d'au moins une unité structurelle A de la formule (I); 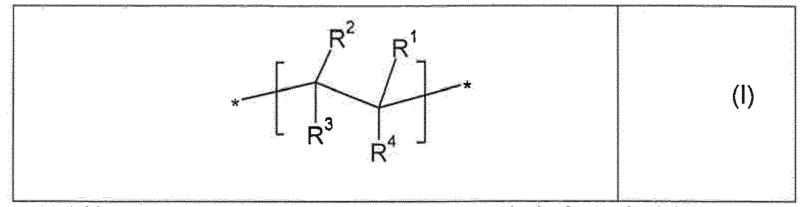
b) n mol-% d'au moins une unité structurelle de la formule (II); 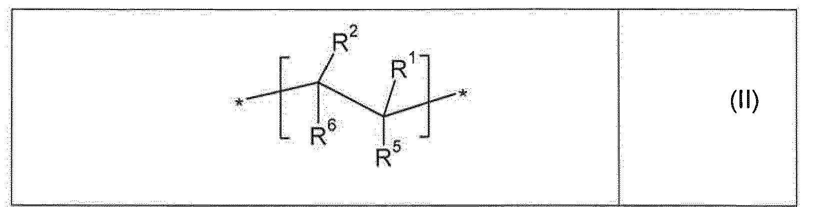
c) o mol-% d'au moins une unité structurelle C de la formule (III); 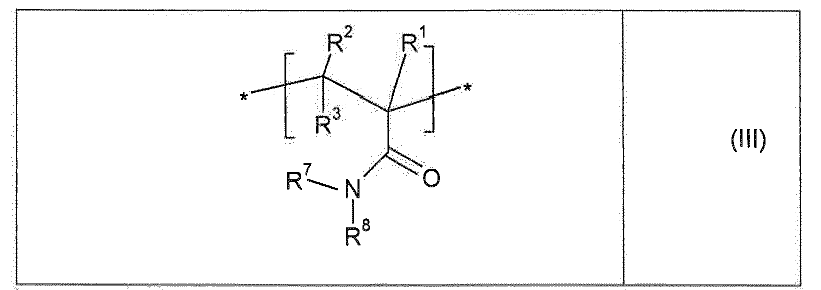 et le cas échéant
d) p mol-% d'au moins une unité structurelle D ;
dans quel cas R¹ correspond indépendamment des autres à H, CH₂COOM ou à un groupe d'alkyle avec 1 à 5 atomes de carbone,
dans quel cas R² correspond indépendamment des autres à H, à un groupe d'alkyle avec 1 à 5 atomes de carbone, COOM ou CH₂COOM ;
dans quel cas R³ correspond indépendamment des autres à H, CH₃, COOM ou CH₂COOM; et
dans quel cas R⁴ correspond indépendamment des autres à COOM ; soit en quel cas R³ forme un anneau avec R⁴ donnant -CO-O-CO- ; dans quel cas M correspond à H, un métal alcalin, l'ammonium, à un cation ammonium seul ou en composition ;
dans quel cas R⁵ correspond indépendamment des autres 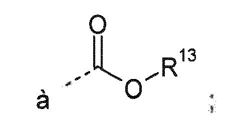 dans quel cas R¹³ correspond à -[(R⁹O)ₓ-(R¹⁰O)_{y}-(R¹¹O)_{z}]-_{R}¹²;
dans quel cas R⁹, R¹⁰ et R¹¹ correspond chacun pour soi à un groupe d'alkyle C₂ - C₄ avec une suite des unités (R⁹O). (R¹⁰O) und (R¹¹O) dans un ordre quelconque ;
dans quel cas R¹² correspond à H, un reste alkyle C₁ - C₁₂ ou un reste cyclique alkyle, à un reste C₇ - C₂₀ alkylaryle ou aralkyle soit un reste aryle substitué ou non substitué ;
dans quel cas x, y, z affichent indépendamment des autres les valeurs de 0 - 250 et x+y+z = 3 - 250 ;
dans quel cas R⁶ correspond indépendamment des autres à H, CH₃, COOM, CH₂COOM ou à un substitut défini comme pour R⁵ ;
dans quel cas R⁷ et R⁸ forment ensemble un anneau comprenant le cas échéant des atomes d'oxygène, de soufre ou d'azote ;
soit dans quel cas R⁷ et R⁸ représentent indépendamment des autres H. un groupe d'alkyle C₁ - C₂₀, un groupe cycloalkyle, un groupe aralkyle C₇ - C₁₂, un groupe hydroxyalkyle ou une liaison selon les formules (IV), (V) ou (VI),
-R¹⁴-X(R¹⁵)ᵣ (IV) 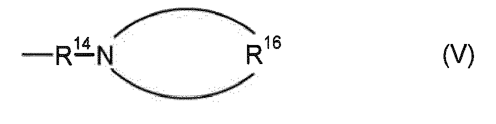
-[(R^{9'}O)_{x'}-(R^{10'}O)_{y'}-(R^{11'}O)_{z'}]- R^{12'} (VI)
Dans quel cas R¹⁴ représente indépendamment des autres un groupe d'alkyles et R¹⁵ correspond à un groupe alkyle C₁ à C₄ et X représente indépendamment des autres un S, O ou N, dans quel cas r=1, si X= S ou O, ou r=2, si X = N;
dans quel cas R¹⁶ est un groupe d'alkylène le cas échéant avec des hétéroatomes ;
dans quel cas R^{9'}, R^{10'} et R^{11'} correspondent chacun pour soi à un groupe d'alkyle C₂ - C₄ avec une suite des unités (R⁹'O), (R¹⁰'O) et (R¹¹'O) dans un ordre quelconque ;
dans quel cas R^{12'} correspond à un reste alkyle C₁ - C₁₂ ou un reste cyclique alkyle, à un reste C₇ - C₂₀ alkylaryle ou aralkyle ou un reste aryle substitué ou non substitué ;
dans quel cas x, y, z affichent indépendamment des autres les valeurs de 0 - 100 et x'+y'+z' = 1 - 100 ;
Dans quel cas *m*, *n*, *o*, *p* signifient indépendamment des autres des chiffres dans quel cas la somme signifie *m+n+o+p =* 100, et *m*>0, *n*>0, *o*>0 et *p*≥0 ; et
dans quel cas le rapport *m*/*(n+o+p)* s'élève à 2 et 6.

2. Utilisation d'un polymère **P** selon la 1^{ère} revendication dans quel cas la composition de gypse comprend 30 massiques de gypse par rapport au poids total du liant.

3. Utilisation d'un polymère **P** selon les 1^{ères} et 2^{ndes} revendications dans quel cas le gypse correspond au sulfate de calcium dihydraté ou sulfate de calcium anhydrique.

4. Utilisation d'un polymère **P** selon l'une des revendications précédentes dans quel cas le polymère **P** est disponible ou fabriqué par l'estérification une réaction analogue à une polymérisation et l'amidation d'un acide polycarboxylique.

5. Utilisation d'un polymère **P** selon la 4^{éme} revendication dans quel cas le polymère **P** est disponible par la réaction de
a) au moins un acide polycarboxylique ou par un analogue d'un acide polycarboxylique ; et
b) au moins d'une liaison monohydroxyle **E** de la formule (VII)
HO-[(R⁹O)ₓ-(R¹⁰O)_{y}-(R¹¹O)_{z}]-R^{12"} (VII)
dans quel cas R⁹, R¹⁰ et R¹¹ correspondent chacun pour soi à un groupe d'alkyle C₂ - C₄ avec une suite des unités (R⁹O), (R¹⁰O) et (R¹¹O) dans un ordre quelconque ;
dans quel cas R^{12"} correspond à un reste alkyle C₁ - C₁₂ ou un reste cyclique alkyle, à un reste C₇ - C₂₀ alkylaryle ou aralkyle ou à un reste aryle substitué ou non substitué ;
dans quel cas x, y,z affichent indépendamment des autres les valeurs de 0 - 250 et x+y+z = 3 - 250 ;
c) au moins une liaison monoamine **F** de la formule (VII)
R^{7'}-NH-R^{8'} (VIII)
et / ou au moins une liaison amine **F**' de la formule (VIII')
R^{7"}-NH-R^{8"} (VIII')
dans quel cas R^{7'} et R^{8'} forment ensemble un anneau comprenant le cas échéant des atomes d'oxygène, de soufre ou d'azote ;
soit dans quel cas R^{7'} et R^{8'} représentent indépendamment des autres H, un groupe d'alkyle C₈ - C₂₀, un groupe cycloalkyle C₅ - C₉, un groupe aralkyle C₇ - C₁₂, une liaison selon les formules (IV), (V) ou (VI),
dans quel cas R^{7"} et R^{8"} forment ensemble un anneau comprenant le cas échéant des atomes d'oxygène, de soufre ou d'azote ;
soit dans quel cas R^{7"} et R^{8"} représentent indépendamment des autres H, un groupe d'alkyle C₁ - C₁₂, un groupe cycloalkyle C₅ - C₉, un groupe aralkyle C₇ - C₁₂, un groupe hydroxyalkyle ou une liaison selon les formules (IV), (V) ou (VI),
-R¹⁴-X(R¹⁵)ᵣ (IV) 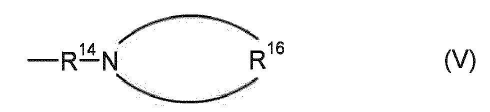
-[(R⁹O)_{x'}-(R^{10'}O)_{y'}-(R¹¹O)_{z'}]- R^{12'} (VI)
dans quel cas R¹⁴ représente indépendamment des autres un groupe d'alkyles et R¹⁵ correspond à un groupe alkyle C₁ à C₄ et X représente indépendamment des autres un S, O ou N, dans quel cas r=1, si X= S ou O, et r=2, si X = N;
dans quel cas R¹⁶ est un groupe d'alkylène le cas échéant avec des hétéroatomes ;
dans quel cas R^{9'}, R^{10'} et R^{11'} correspondent chacun pour soi à un groupe d'alkyle C₂ - C₄ avec une suite des unités (R⁹O), (R^{10'}O), et (R^{11'}O) dans un ordre quelconque ;
dans quel cas R^{12'} correspond à un reste alkyle C₁ - C₁₂ ou un reste cyclique alkyle, à un reste C₇ - C₂₀ alkylaryle ou aralkyle ou à un reste aryle substitué ou non substitué ;
dans quel cas x', y', z' affichent indépendamment des autres les valeurs de 0 - 100 et x'+y'+z'= 1-100;
et le cas échéant
d) au moins une liaison supplémentaire **G**.

6. Utilisation d'un polymère **P** selon la 5^{éme} revendication **caractérisé par le fait qu'**il se traduit par au moins un acide polycarboxylique ou l'analogue d'un acide polycarboxylique avec au moins une liaison monohydroxylée **E** de la formule (VII) et le cas échéant au moins une liaison monoaminée **F** selon la formule (VIII) et le cas échéant au moins un autre liaison **G** par une température atteignant 200°C de façon à créer des groupes anhydriques et à transformer dans un deuxième temps les groupes anhydriques formés en premier temps complètement ou en partie en amides avec une liaison aminée **F**' selon la formule (VIII') avec des températures bien en dessous de 100°C.

7. Utilisation d'un polymère P selon l'une des 5^{ème} et 6^{éme} revendications dans quel cas on choisit l'analogue de l'acide polycarboxylique du polymère **P** parmi le groupe des sels acides, halogéniques, anhydriques et des esters.

8. Utilisation d'un polymère **P** selon l'une des revendications 1 et 3 dans quel cas le polymère **P** est disponible ou est créé grâce à une réaction de polymérisation radicalaire.

9. Utilisation d'un polymère **P** selon la 8^{ème} revendication dans quel cas le polymère **P** est disponible par la réaction de polymérisation en présence d'au moins un formateur de radicaux de
a) au moins un acide mono ou dicarbonique éthylénique et insaturé **M** ou un analogue d'un acide mono ou dicarbonique insaturé ; avec
b) au moins un dérivé d'acide carboxylique **H** selon la formule (IX) ; 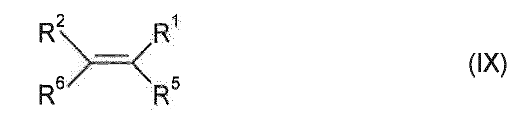
c) au moins un second dérivé d'acide carboxylique éthylénique et insaturé K selon la formule (X) ; 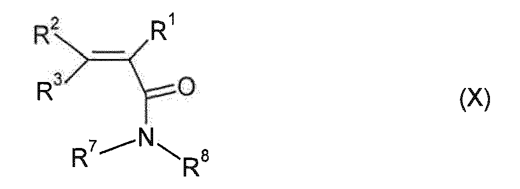 et le cas échéant
d) au moins une autre liaison L éthylénique et insaturée,
dans quel cas R¹ correspond indépendamment des autres à H, CH₂COOM ou à un groupe d'alkyle avec 1 à 5 atomes de carbone,
dans quel cas R² correspond indépendamment des autres à H, à un groupe d'alkyle avec 1 à 5 atomes de carbone, COOM ou CH₂COOM ;
dans quel cas R³ correspond indépendamment des autres à H, CH₃, COOM ou CH₂COOM; et
dans quel cas M correspond à H, un métal alcalin, l'ammonium, à un cation ammonium seul ou en composition ;
dans quel cas R⁵ correspond indépendamment des autres 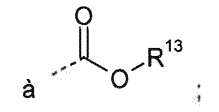 dans quel cas R¹³ correspond à -[(R⁹O)ₓ-(R¹⁰O}_{y}-(R¹¹O)_{z}]-R¹²;
dans quel cas R⁹, R¹⁰ et R¹¹ correspondent chacun pour soi à un groupe d'alkyle C₂ - C4 avec une suite des unités (R⁹O), (R¹⁰O), et (R¹¹O) dans un ordre quelconque ;
dans quel cas R¹² correspond à H, un reste alkyle C₁ - C₁₂ ou un reste cyclique alkyle, à un reste C₇ - C₂₀ alkylaryle ou aralkyle soit un reste aryle substitué ou non substitué ;
dans quel cas x, y, z affichent indépendamment des autres les valeurs de 0 - 250 et x+y+z = 3 - 250 ;
dans quel cas R⁶ correspond indépendamment des autres à H, CH₃, COOM, CH₂COOM ou à un substitut défini comme pour R⁵ ;
dans quel cas R⁷ et R⁸ forment ensemble un anneau comprenant le cas échéant des atomes d'oxygène, de soufre ou d'azote ;
soit dans quel cas R⁷ et R⁸ représentent indépendamment des autres H, un groupe d'alkyle C₁ - C₂₀, un groupe cycloalkyle C₅ - C₉, un groupe aralkyle C₇ - C₁₂, un groupe hydroxyalkyle ou une liaison selon les formules (IV), (V) ou (VI),
-R¹⁴-X(R¹⁵)ᵣ (IV) 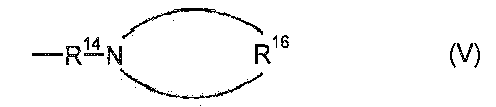
-[(R^{9'}O)_{x'}-(R^{10'}O)_{y'}-(R¹¹O)_{z'}]- R^{12'} (VI)
dans quel cas R¹⁴ représente indépendamment des autres un groupe d'alkyles et R¹⁵ correspond à un groupe alkyle C₁- à C₄- et X représente indépendamment des autres un S, O ou N, dans quel cas r=1, si X= S ou O, ou r=2, si X = N;
dans quel cas R¹⁶ est un groupe d'alkylène le cas échéant avec des hétéroatomes ;
dans quel cas R^{9'}, R^{10'} et R^{11'} correspondent chacun pour soi à un groupe d'alkyle C₂ - C₄ avec une suite des unités (R^{9'}O). (R^{10'}O), et (R^{11'}O) dans un ordre quelconque ;
dans quel cas R^{12'} correspond à un reste alkyle C₁ - C₁₂ ou un reste cyclique alkyle, à un reste C₇ - C₂₀ alkylaryle ou aralkyle ou à un reste aryle substitué ou non substitué ;
dans quel cas x', y', z' affichent indépendamment des autres les valeurs de 0 - 100 et x'+y'+z' = 1 - 100.

10. Utilisation d'un polymère **P** selon l'une des revendications précédentes dans quel cas dans le polymère **P** comporte R¹ correspondant à H ou CH₃ et R², R³ et M correspondant à H.

11. Utilisation selon l'une des revendications précédentes en cela **caractérisée par** R⁶ correspondant à H.

12. Utilisation selon selon l'une des revendications précédentes en cela **caractérisée par le fait que** R⁹ correspond indépendamment des autres à un groupe alkylen C₂, R10 indépendamment des autres à un groupe alkylène C₃ et indépendamment des autres à un groupe alkylen C₄ et dans quel cas la suite de (R⁹O), (R¹⁰O) et (R¹¹O) est aléatoire, alternée ou en bloc.

13. Utilisation selon selon la revendication 12 en cela **caractérisée par le fait que** R¹³ comprend au moins 30 mol- % d'unité (R⁹O), de préférence 50 à 100 mol-% d'unité (R⁹O), plus particulièrement 80 à 100 mol-% d'unité (R⁹O) par rapport à la masse molaire totale de toutes les unités (R⁹O), (R¹⁰O) et (R¹¹O).

14. Utilisation selon selon la revendication 13 en cela **caractérisée par le fait que** R¹³ comprend au moins 100 mol- % d'unité (R⁹O) par rapport à la masse molaire totale de toutes les unités (R⁹O), (R¹⁰O) et (R¹¹O).

15. Utilisation selon l'une des revendications précédentes dans quel cas le polymère P comprend 50 à 95 mol-%, de préférence 66 à 86 mol-% de l'unité structurelle **A** selon la formule (I), 5 à 50 mol-%, de préférence 14 à 34 Mol-% de l'unité structurelle **B** selon la formule (II), 0.001 à 30 mol%, de préférence 0.01 à 1 mol-% de l'unité structurelle **C** selon la formule (III), et le cas échéant 0 à 30 mol-%, de préférence 0 à 1 mol-% de l'unité structurelle **D** par rapport à la masse molaire totale de toutes les unités structurelles de **A, B, C et D** dans le polymère **P.**

16. Utilisation selon l'une des revendications précédentes en cela **caractérisée par le fait que** le polymère P affiche une masse molaire oscillant entre 1'000 - 150'000 g/mol, de préférence 10'000 - 100'000 g/mol, plus particulièrement 30'000-80'000 g/mol.

17. Utilisation d'un polymère **P** selon l'une des revendications précédentes en cela **caractérisée par le fait que** le polymère **P** est utilisé sous forme liquide ou solide.

18. Mélange contenant un liant comprenant au moins 30 % massiques de gypse par rapport au poids total du liant, et au moins un polymère **P** dans quel cas le polymère **P** comprend :
a) *m* mol-% au moins une unité structurelle **A** de la formule (I); 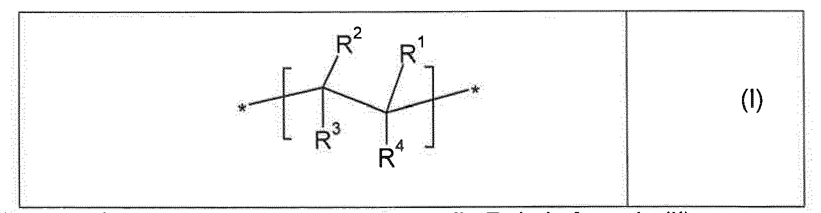
b) *n* mol-% d'au moins une unité structurelle **B** de la formule (II); 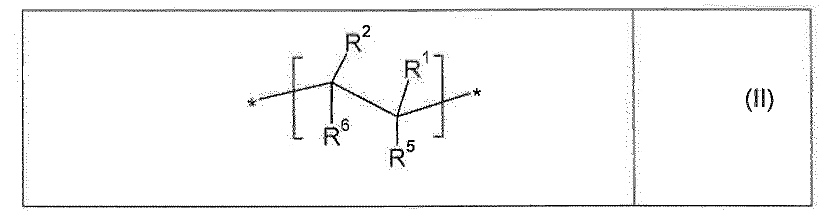
c) *o* mol-% d'au moins une unité structurelle **C** de la formule (III); 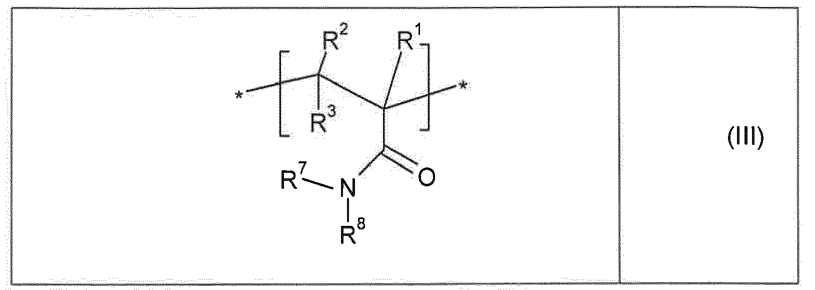 et le cas échéant
d) *p* mol-% d'au moins une autre unité structurelle **D** ;
dans quel cas R¹ correspond indépendamment des autres à H, CH₂COOM ou à un groupe d'alkyle avec 1 à 5 atomes de carbone,
dans quel cas R² correspond indépendamment des autres à H, à un groupe d'alkyle avec 1 à 5 atomes de carbone, COOM ou CH₂COOM ;
dans quel cas R³ correspond indépendamment des autres à H, CH₃, COOM ou CH₂COOM; et
dans quel cas R⁴ correspond indépendamment des autres à COOM ; soit en quel cas R³ forme un anneau avec R⁴ donnant -CO-O-CO- ;
dans quel cas M correspond à H, un métal alcalin, l'ammonium, à un cation ammonium seul ou en composition ;
dans quel cas R⁵ correspond indépendamment des autres
à 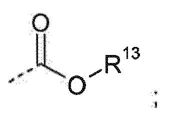 dans quel cas R¹³ correspond à -[(R⁹O)ₓ-(R¹⁰O)_{y}-(R¹¹O)_{z}]-R¹²;
dans quel cas R⁹, R¹⁰ et R¹¹ correspondent chacun pour soi à un groupe d'alkyle C₂ - C₄ avec une suite des unités (R⁹O)-, (R¹⁰O)-, und (R¹¹O)- dans un ordre quelconque ;
dans quel cas R¹² correspond à H, un reste alkyle C₁ - C₁₂ ou un reste cyclique alkyle, à un reste C₇ - C₂₀ alkylaryle ou aralkyle soit un reste aryle substitué ou non substitué ;
dans quel cas x, y, z affichent indépendamment des autres les valeurs de 0 - 250 et x+y+z = 3 - 250 ;
dans quel cas R⁶ correspond indépendamment des autres à H, CH₃, COOM, CH₂COOM ou à un substitut défini comme pour R5 ;
dans quel cas R⁷ et R⁸ forment ensemble un anneau comprenant le cas échéant des atomes d'oxygène, de soufre ou d'azote ;
soit dans quel cas R⁷ et R⁸ représentent indépendamment des autres H, un groupe d'alkyle C₁ - C₂₀, un groupe cycloalkyle C₅ - C₉, un groupe aralkyle C₇ - C₁₂, un groupe hydroxyalkyle ou une liaison selon les formules (IV), (V) ou (VI),
-R¹⁴-X(R¹⁵)ᵣ (IV) 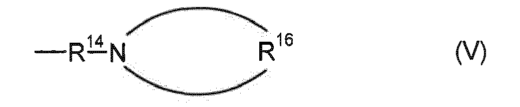
-[(R^{9'}O)_{x'}-(R^{10'}O)_{y'}-(R¹¹O)_{z'}]- R^{12'} (VI)
dans quel cas R¹⁴ représente indépendamment des autres un groupe d'alkyles et R¹⁵ correspond à un groupe alkyle C₁- à C₄- et X représente indépendamment des autres un S, O ou N, dans quel cas r=1, si X = S ou O, ou r=2, si X = N;
dans quel cas R¹⁶ est un groupe d'alkylène le cas échéant avec des hétéroatomes ;
dans quel cas R^{9'}, R^{10'} et R^{11'} correspondent chacun pour soi à un groupe d'alkyle C₂ - C₄ avec une suite des unités (R^{9'}O), (R^{10'}O), und (R^{11'}O) dans un ordre quelconque ;
dans quel cas R^{12'} correspond à un reste alkyle C₁ - C₁₂ ou un reste cyclique alkyle, à un reste C₇ - C₂₀ alkylaryle ou aralkyle ou à un reste aryle substitué ou non substitué ;
dans quel cas x', y', z' affichent indépendamment des autres les valeurs de 0 -100 et x'+y'+z' = 1 - 100 ;
dans quel cas m, n, o, p signifient indépendamment des autres des chiffres dans quel cas la somme signifie *m+n+o+p =* 100, et *m*>0, *n>0,* o>0 et p≥0 ; et
dans quel cas le rapport *m*/*(n+o+p)* s'élève à 2 et 6.

19. Mélange contenant un liant selon la revendication 18 en cela caractérisée que le gypse signifie du sulfate de calcium dihydraté, sulfate de calcium semi-hydraté ou du sulfate de calcium anhydrique.

20. Mélange contenant un liant selon l'une des revendications 18 à 19 en cela caractérisée que le polymère **P** est disponible ou créé grâce à une réaction d'estérification analogue à la polymérisation et de l'amidation d'un acide polycarboxylique.

21. Mélange contenant un liant selon l'une des revendications 18 à 19 en cela caractérisée que le polymère **P** est disponible ou créé grâce à une réaction de polymérisation radicalaire.

22. Procédé pour la fabrication d'un mélange contenant un liant selon l'une des revendications 18 à 21 en cela caractérisée que le polymère **P** est ajouté au liant séparémment ou en adjuvant prémélangé sous forme solide ou liquide.
